# FASCICULE DE BREVET EUROPEEN

(11) **EP 3 049 669 B1**
(45) Date de publication et mention de la délivrance du brevet: **25.03.2020**
(21) Numéro de dépôt: 14784322.1
(22) Date de dépôt: 22.09.2014
(51) Int. Cl.: F03G 7/10

(54) **DISPOSITIF DE ROTATION GRAVITAIRE**
SCHWERKRAFTROTATIONSVORRICHTUNG
GRAVITY ROTATION DEVICE

(30) Priorité: 23.09.2013 FR 1359120
(43) Date de publication de la demande: 03.08.2016
(73) Titulaire: Pellegrin, Philippe, 13007 Marseille (FR)
(72) Inventeur: PELLEGRIN, Christian, F-13007 Marseille (FR)
(74) Mandataire: Cabinet Beau de Loménie
(86) Numéro de dépôt international: PCT/FR2014/052351
(87) Numéro de publication internationale: WO 2015/040340

(56) Documents cités:
- CN-A- 1 525 063
- CN-Y- 2 603 229
- US-A- 5 921 133
- US-A1- 2008 011 552

## Description

La présente invention concerne un dispositif de rotation gravitaire et un procédé de rotation d'un tel dispositif.

Il a été longtemps désiré de trouver un dispositif de rotation gravitaire qui utilise l'énergie gravitaire produite par la descente d'une ou plusieurs masses. Ces dispositifs comprennent souvent des disques entrainés en rotation grâce à un couple produit par une masse éloignée d'un axe de rotation, le couple produit permettant d'entrainer en rotation le disque, et par conséquent un arbre moteur par exemple. Cette rotation pourrait être ensuite exploitée pour générer de l'énergie électrique.

Le couple contribue à la rotation du dispositif en phase descendante. En revanche, en phase montante, lorsque la masse reste à la même distance de l'axe de rotation, elle produit un couple antagoniste qui freine la rotation du dispositif. Pour ces raisons, les dispositifs de rotation gravitaire connus comprennent des mécanismes permettant de faire varier la distance entre la masse et l'axe de rotation, selon que la masse soit en phase montante ou descendante.

La demande de brevet FR 2 830 289 concerne un dispositif rotatif gravitaire comprenant un disque rotatif autour d'un arbre de rotation, des glissières orientées radialement horizontales sur le disque et un moteur. Deux masselottes sont portées par une crémaillère montée sur les glissières. Les masselottes sont aptes à se rapprocher ou s'éloigner de l'arbre de rotation du disque selon une même direction sous l'action du moteur qui induit une translation de la crémaillère et donc des masselottes le long des glissières entrainant la rotation du disque.

La demande de brevet WO 02/070893 concerne un dispositif rotatif gravitaire comprenant un support fermé ayant la forme d'un disque, un arbre de rotation et des masses semi-sphériques. Le support est fixe et l'arbre de rotation est monté excentré par rapport au centre du disque. Les masses sont aptes à tourner autour de l'arbre et entrainent l'arbre en rotation. A cette fin, des paires de masses sont montées coulissantes sur des tiges fixées sur des côtés opposées de l'arbre de rotation. Des ressorts cylindriques sont montés sur chaque tige entre la masse et l'extrémité de l'arbre de rotation afin de contrôler la distance entre la masse et l'arbre de rotation. Sur la phase descendante d'une masse, le ressort est comprimé par contact de la masse contre la paroi externe du disque. Sur la phase montante de la masse, le ressort est détendu. Ainsi, par l'action du ressort, pour chaque paire de masses, la masse en phase descendante est la plus éloignée de l'arbre de rotation et la masse en phase descendante est rapprochée de l'arbre de rotation.

La demande de brevet FR 2 812 348 concerne un dispositif rotatif gravitaire comprenant deux pignons, une chaine et des supports en forme de crochet sur lesquels des masses s'étendant selon une direction longitudinale sont disposées. Les deux pignons ont des axes de rotation parallèles et sont décalés verticalement l'un par rapport à l'autre, la chaine étant tendue entre les deux pignons. Les supports sont fixés à la chaine et l'entrainent en rotation, et par conséquent les pignons, grâce aux masses présentes sur les supports. Les masses se déplacent librement dans le sens d'inclinaison du support, s'éloignant de la chaine dans le sens montant et se rapprochant de la chaine dans le sens descendant. Dans une position verticale en bas du dispositif, un support relâche la masse correspondante qui est attrapée par une glissière disposée en-dessous du pignon inférieur. Le support se retourne après avoir fait le tour du pignon inférieur et récupère la masse relâchée par le support précèdent. La masse se dispose à l'extrémité intérieure du support, pour la phase montante. Arrivée en haut du pignon supérieur, lors du retournement du support, la masse roule et tombe sur le support suivant. En raison de l'inclinaison du support vers le bas, la masse se dispose à l'extrémité extérieure du support, tenue par le crochet, pour la phase descendante.

La demande de brevet CN 2603229 concerne un dispositif comprenant une roue dentée configuré à pivoter autour d'un axe central et relié à deux systèmes d'engrenages, un poids et un contrepoids montés sur les extrémités d'une barre reliée à la roue, la barre ayant un axe perpendiculaire à l'axe central et décalé par rapport au centre de la roue. Pour mettre le dispositif en marche, un poids est pivoté 180° autour de l'axe perpendiculaire, provoquant un demi-tour de la roue, jusqu'à l'équilibre du dispositif. Ensuite, un poids est de nouveau pivoté 180° autour de l'axe perpendiculaire. La roue effectue encore un demi-tour, et se retrouve dans la position initiale.

La demande de brevet CN 1525063 concerne un dispositif similaire, comprenant en outre une deuxième roue dentée face à la première, ainsi qu'un poids et un contrepoids montés de la même façon. Les poids en haut s'approche l'un à l'autre, et les roues tournent indépendamment dans les sens opposés, un demi-tour chacune.

La demande de brevet US 2008/011552 concerne un dispositif comprenant des bras oscillants fixés de manière rotative autour d'une partie centrale et des poids montés de manière coulissante sur barre montée sur les bras oscillants, chaque barre ayant des galets aux extrémités qui sont tenus dans un rail fixe définissant un chemin asymétrique autour de la section centrale. Le mouvement rotatif est produit par la différence d'éloignement entre l'axe du rail et la position d'un galet qui se trouve successivement à chaque cycle proche puis éloigné de cet axe, créant un couple moteur.

La figure 1 représente une vue de côté d'un dispositif rotatif 1 décrit par le brevet US 5,921,133. Le dispositif 1 est monté sur un support 2 et comprend un premier disque 3, un second disque 4, chacun comprenant un poids « non-équilibré » ou balourd 5, 6 respectivement, c'est-à-dire pour lequel le centre de gravité est excentré par rapport au centre du disque et dont le poids ne peut être compensé par une autre masse de façon à avoir le centre de gravité au centre du disque. Les disques 3, 4 sont alignés axialement et connectés par un arbre support 7 afin de pouvoir tourner autour d'un axe de rotation central AA'. Un embrayage unidirectionnel ou « roue libre » primaire 8 est monté sur l'arbre 7. Une pluralité d'engrenages 9 sont montés équidistants autour de l'extérieur de la périphérie du premier disque 3, les périphéries du disque 3 et des engrenages 9 étant dentées pour coopérer l'un avec l'autre. Chaque engrenage 9 est traversé par un arbre de rotation 10 orienté selon un axe de rotation périphérique BB'. Un poids « levier » 11 est monté sur chaque arbre 10. L'arbre 10 couple ainsi mécaniquement les engrenages 9 et le disque 4. Des roues libres secondaires 12 sont agencées entre les arbres de rotation 10, les engrenages 9 et le disque 4 afin que la rotation du levier 11 autour de l'arbre de rotation 10 soit transmise au second disque 4.

Selon ce document, les poids balourds 5, 6 entrainent le dispositif 1 initialement en rotation. Ensuite, les leviers 11 commencent à pivoter et font tourner le disque 3 plus vite que le disque 4 dû à la roue libre primaire 8. Le disque 3 commence à tourner plus vite que le disque 4 car le disque 3 est poussé dans le sens antihoraire par les engrenages 9. En raison de leurs vitesses différentes, les poids 5, 6 des disques 3, 4 commencent à se séparer et la roue 3 tourne avec une vitesse croissante pendant environ deux tiers d'un cycle de rotation et avec une vitesse décroissante pendant environ un tiers d'un cycle de rotation, lorsque le balourd 5 du disque 2 se rapproche de la masse de balourd 6 de la roue 4.

Il pourrait être souhaitable de fournir un nouveau dispositif de rotation gravitaire.

Des modes de réalisation de l'invention concernent un dispositif de rotation gravitaire comprenant un premier disque comprenant un axe central autour duquel le disque est apte à tourner et au moins un axe de rotation périphérique disposé à distance de et parallèle à l'axe central, au moins un arbre de rotation périphérique disposé à distance de l'axe central du premier disque, apte à tourner autour de l'axe de rotation périphérique, parallèle à l'axe central et couplé au premier disque, et au moins un support de masse monté sur l'arbre de rotation périphérique et ayant une masse apte à être éloignée de l'arbre de rotation afin de produire un couple faisant pivoter l'arbre de rotation, et par conséquent le premier disque.

Selon l'invention, le dispositif comprend en outre un engrenage réducteur disposé entre l'arbre de rotation périphérique et le premier disque, comprenant une pièce d'entrée de rotation reliée à l'arbre de rotation périphérique et une pièce de sortie de rotation reliée au premier disque et coaxiales entre elles, l'engrenage réducteur permettant à la rotation de l'arbre de rotation périphérique d'être transmise au premier disque.

Le dispositif comprend en outre des moyens pour fixer au moins une portion de l'engrenage réducteur dans une position fixe afin de l'empêcher de tourner autour de l'axe de rotation périphérique ; une roue libre agencée sur l'arbre de rotation périphérique ; et des moyens pour modifier l'angle d'inclinaison d'un support de masse sur l'arbre de rotation périphérique par rapport à l'horizontale passant par l'axe de rotation périphérique de l'arbre.

Le dispositif selon l'invention utilise au moins un support de masse amené en rotation par une masse excentrée par rapport à son axe de rotation. La masse excentrée peut être constituée par le support de masse lui-même, lorsque son centre de gravité est suffisamment éloigné de son axe de rotation, ou par une masse suspendue sur le support de masse et permet de produire un couple agissant sur le premier disque pour l'amener en rotation. Le nombre de tours effectués par le premier disque étant limité par l'angle d'inclinaison du support de masse dans sa position de départ, le dispositif selon l'invention permet d'augmenter le nombre de tours effectué en utilisant un engrenage réducteur (aussi appelé « réducteur ») situé entre l'arbre de rotation du support de masse et le premier disque afin d'augmenter la vitesse angulaire du premier disque par rapport au support de masse. La structure particulière du réducteur permet d'augmenter l'efficacité de transmission du couple produit par le support de masse vers le premier disque.

Dans ce mode de réalisation, le dispositif comprend des moyens permettant de recréer de l'énergie potentielle gravitaire et d'augmenter le nombre de tours pouvant être effectués par le dispositif. Pour cela, l'inclinaison d'un ou plusieurs supports de masse est modifiée de façon à recréer un couple autour d'un ou plusieurs axes de rotation périphérique, lorsque la masse excentrée créant le couple est à la verticale, ou de façon à prolonger la rotation du support de masse et donc l'existence du couple produit. La roue libre permet de modifier l'angle d'inclinaison dans le sens contraire de rotation du support de masse tout en permettant au premier disque de continuer à tourner dans le même sens de rotation.

Dans un mode de réalisation, l'engrenage réducteur comprend en outre une couronne périphérique reliée à la pièce d'entrée de rotation, un engrenage de sortie reliée à la pièce de sortie de rotation, et au moins un engrenage satellite agencé entre la couronne périphérique et l'engrenage de sortie, et les moyens pour fixer au moins une portion de l'engrenage réducteur comprennent en outre des portes satellites fixées aux engrenages satellites et des pièces de verrouillage fixées aux portes satellites.

Dans un mode de réalisation, le dispositif comprend en outre un second disque apte à tourner autour d'un axe central et couplé au premier disque afin qu'une rotation du premier disque entraine le second disque en rotation, les moyens pour fixer la portion de l'engrenage réducteur étant couplés au second disque.

Dans ce mode de réalisation, les moyens pour fixer la portion de l'engrenage réducteur dans une position déterminée sont couplés à un second disque. Le second disque tournant dans le même sens et à la même vitesse que le premier disque, la portion de l'engrenage réducteur reste dans une position fixe par rapport au premier disque tout en permettant la rotation de l'ensemble et en rendant effective la transmission du couple produit par le support de masse.

Dans un mode de réalisation, l'axe central du second disque est excentré par rapport à l'axe central du premier disque.

Dans ce mode de réalisation, le second disque est excentré par rapport au premier disque. Cela simplifie grandement la réalisation du réducteur et la connexion des moyens de fixation de l'engrenage satellite sur le second disque.

Dans un mode de réalisation, le dispositif comprend au moins deux arbres de rotation périphériques, chacun étant disposé à une distance sensiblement la même de l'axe central du premier disque et ayant un axe de rotation périphérique parallèle à l'axe central couplé au premier disque et équidistant angulairement par rapport au centre du premier disque ; et au moins deux supports de masse, chacun monté sur un arbre de rotation périphérique et ayant une masse apte à être éloignée de l'arbre de rotation périphérique afin de produire un couple faisant pivoter l'arbre de rotation périphérique, et par conséquent le premier disque.

Dans ce mode de réalisation, le dispositif comprend au moins deux supports de masse situés à une même distance par rapport à l'axe central du premier disque et équidistants angulairement par rapport au centre du premier disque. Le système peut donc être maintenu en équilibre lorsque les au moins deux masses sont situées sur l'axe de rotation du support de masse et mis en marche lorsque l'on éloigne l'une des masses de l'axe de rotation.

Dans un mode de réalisation, le premier disque comprend un arbre de rotation central et le second disque comprend un arbre de rotation central, les arbres de rotation centraux étant reliés par une pièce de raccordement.

Dans ce mode de réalisation, la pièce de raccordement aide à supporter et faire tourner les deux disques au moyen de leurs arbres de rotation centraux, qui sont généralement assez solides.

Dans un mode de réalisation, le dispositif comprend en outre un élément de support relié à l'arbre de rotation central du second disque tout en permettant au premier disque et au second disque de tourner.

Dans ce mode de réalisation, l'élément de support permet d'éloigner le dispositif du sol tout en permettant aux disques de tourner.

Dans un mode de réalisation, le dispositif comprend en outre un troisième disque agencé en face du premier disque, apte à tourner autour de l'axe central du premier disque et supportant une extrémité des arbres de rotation périphériques.

Dans ce mode de réalisation, lorsque des masses importantes sont soutenues par le support de masse, il est avantageux d'utiliser un troisième disque relié aux arbres de rotation périphériques pour mieux répartir la charge.

Dans un exemple ne formant pas partie de l'invention, les moyens pour modifier l'angle comprennent une came intérieure comprenant une surface de guidage et agencée sur le premier disque et un galet de roulement agencé sur une surface intérieure d'un support de masse et apte à venir en contact avec la surface de guidage de la came pendant la rotation du premier disque, afin de guider la rotation du support de masse dans le sens opposé de la rotation du premier disque, grâce à la roue libre et de changer l'angle d'inclinaison du support de masse.

Dans cet exemple, la modification d'inclinaison du support de masse se fait par guidage d'un galet de roulement contre une came, la came étant intérieure au dispositif rotatif.

Dans un mode de réalisation, les moyens pour modifier l'angle comprennent au moins une came extérieure agencée en face de l'extrémité extérieure d'un support de masse et comprenant une surface de guidage et un galet de roulement agencé sur une surface extérieure d'un support de masse et apte à venir en contact avec la surface de guidage de la came pendant la rotation du premier disque, afin de guider la rotation du support de masse dans le sens opposé de la rotation du premier disque, grâce à la roue libre et de changer l'angle d'inclinaison du support de masse.

Dans ce mode de réalisation, la came est extérieure au dispositif rotatif. Ce mode de réalisation est particulièrement avantageux lorsque les masses considérées sont relativement importantes.

Dans un mode de réalisation, le dispositif comprend en outre un moteur relié à la came extérieure et apte à entrainer en rotation la came autour d'un axe de rotation de la came dans le même sens de rotation que le premier disque.

Dans ce mode de réalisation, un moteur permet d'entrainer la came en rotation. Le galet de roulement ne glisse pas contre la surface de la came et la came est entrainée en rotation par le moteur. Ceci apporte une énergie extérieure.

Dans un mode de réalisation, le support de masse comprend deux plaques de forme triangulaire, agencées à distance l'une de l'autre et dans des plans parallèles, reliées l'une à l'autre par des éléments de support longitudinaux, les côtés supérieurs des plaques comprenant des rails ; et dans lequel une barre porte masse est supportée à ses deux extrémités par les rails et apte à se déplacer dans une direction le long des côtés supérieurs des plaques.

Dans ce mode de réalisation, la structure particulière du support de masse permet de supporter des masses importantes et d'augmenter le couple produit et transmis au premier disque.

Dans un mode de réalisation, les rails du support de masse comprennent chacun une pluralité de cales électromagnétiques aptes à se lever afin de bloquer le déplacement de la barre porte masse et à se baisser afin de permettre le déplacement de la barre porte masse le long des côtés supérieurs des plaques.

Dans ce mode de réalisation, lorsque les supports de masse sont inclinés par rapport à l'horizontale, la barre porte masse peut se déplacer le long des côtés supérieurs des plaques selon une direction d2 par simple action de la gravité. Les cales électromagnétiques permettent de libérer ou de verrouiller la position de la barre porte masse. Il est donc possible, en faisant varier la distance entre l'axe de rotation du support de masse et la masse excentrée, de faire varier le couple produit.

Des modes de réalisation de l'invention concernent en outre un procédé de rotation d'un dispositif de rotation gravitaire selon l'invention, le procédé comprenant les étapes de : éloigner la masse d'un support de masse par rapport à l'arbre de rotation périphérique afin de produire un couple faisant pivoter l'arbre de rotation périphérique, et par conséquent le premier disque ; et modifier l'angle d'inclinaison d'un support de masse sur l'arbre de rotation périphérique par rapport à l'horizontal passant par l'axe périphérique de l'arbre.

Le procédé selon l'invention permet une mise en marche du système en éloignant la masse sur le support de masse. Dans ce mode de réalisation, il est possible de recréer de l'énergie potentielle gravitaire et d'augmenter le nombre de tours pouvant être effectués par le dispositif en modifiant l'angle d'inclinaison d'un support de masse par rapport à l'axe de rotation périphérique.

Des modes de réalisation de l'invention concernent en outre un procédé de montage d'un dispositif de rotation gravitaire selon l'invention. Le procédé comprend les étapes de : monter un premier disque comprenant un axe central autour duquel le disque est apte à tourner, et au moins un axe de rotation périphérique disposé à distance de et parallèle à l'axe central ; monter au moins un arbre de rotation périphérique disposé à distance de l'axe central du premier disque, apte à tourner autour de l'axe de rotation périphérique, parallèle à l'axe central et couplé au premier disque ; monter un engrenage réducteur entre l'arbre de rotation périphérique et le premier disque, l'engrenage réducteur comprenant une pièce d'entrée de rotation reliée à l'arbre de rotation périphérique et une pièce de sortie de rotation reliée au premier disque et coaxiales entre elles, l'engrenage réducteur permettant la rotation de l'arbre de rotation périphérique d'être transmise au premier disque ; monter des moyens pour fixer au moins une portion de l'engrenage réducteur dans une position fixe afin de l'empêcher de tourner autour de l'axe de rotation périphérique ; monter une roue libre sur l'arbre de rotation périphérique ; monter au moins un support de masse sur l'arbre de rotation périphérique, le support de masse ayant une masse apte à être éloignée de l'arbre de rotation afin de produire un couple faisant pivoter l'arbre de rotation; et monter des moyens pour modifier l'angle d'inclinaison du support de masse sur l'arbre de rotation périphérique par rapport à l'horizontal passant par l'axe de rotation périphérique de l'arbre.

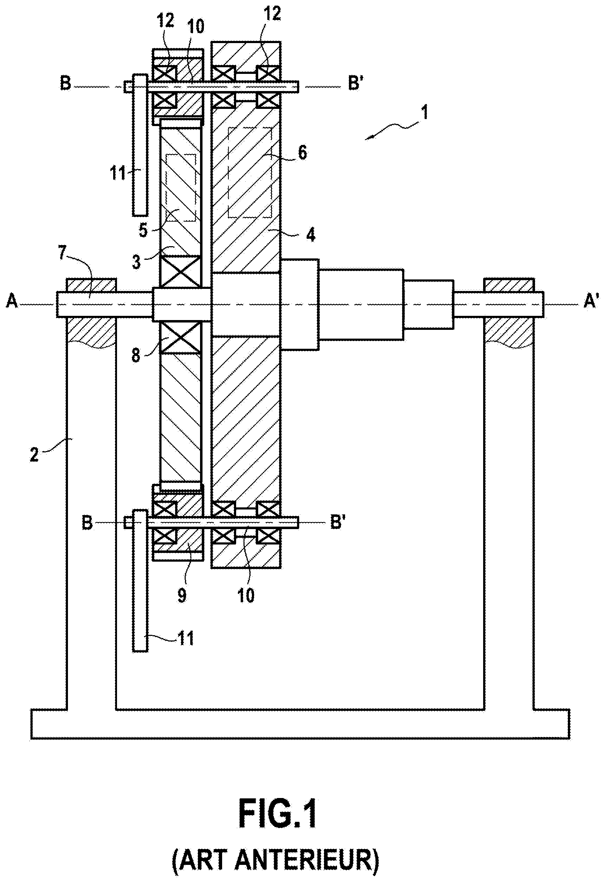

D'autres caractéristiques et avantages de la présente invention ressortiront mieux à la lecture de la description qui va suivre, faite de manière illustrative et non limitative, en référence aux dessins annexés sur lesquels
- la figure 1, précédemment décrite, représente une vue de côté d'un dispositif rotatif connu,
- les figures 2A à 2D représentent un premier aspect du principe de fonctionnement d'un dispositif rotatif,
- les figures 3A et 3B représentent un second aspect du principe de fonctionnement d'un dispositif rotatif,
- les figures 4A à 4D représentent différentes vues d'un dispositif rotatif selon un premier mode de réalisation,
- la figure 5 représente une vue en coupe détaillée d'un réducteur selon un mode de réalisation,
- la figure 6 représente une vue en perspective d'un dispositif rotatif selon un autre mode de réalisation,
- la figure 7 représente une vue en perspective détaillée d'un support de masse selon un mode de réalisation,
- la figure 8A représente un exemple de dispositif rotatif ne formant pas partie de l'invention,
- la figure 8B représente une vue en perspective d'un support de masse selon un exemple ne formant pas partie de l'invention,
- la figure 9 représente une vue de face du dispositif rotatif de la figure 8A équipé du support de masse de la figure 8B,
- la figure 10 représente une vue en perspective d'un dispositif rotatif selon un autre mode de réalisation,
- la figure 11 représente une vue de face d'un dispositif de rotation selon un autre mode de réalisation,
- la figure 12 représente une vue en perspective d'un support de masse selon un autre mode de réalisation, et
- la figure 13 représente une vue en coupe détaillée d'un réducteur selon un autre mode de réalisation.

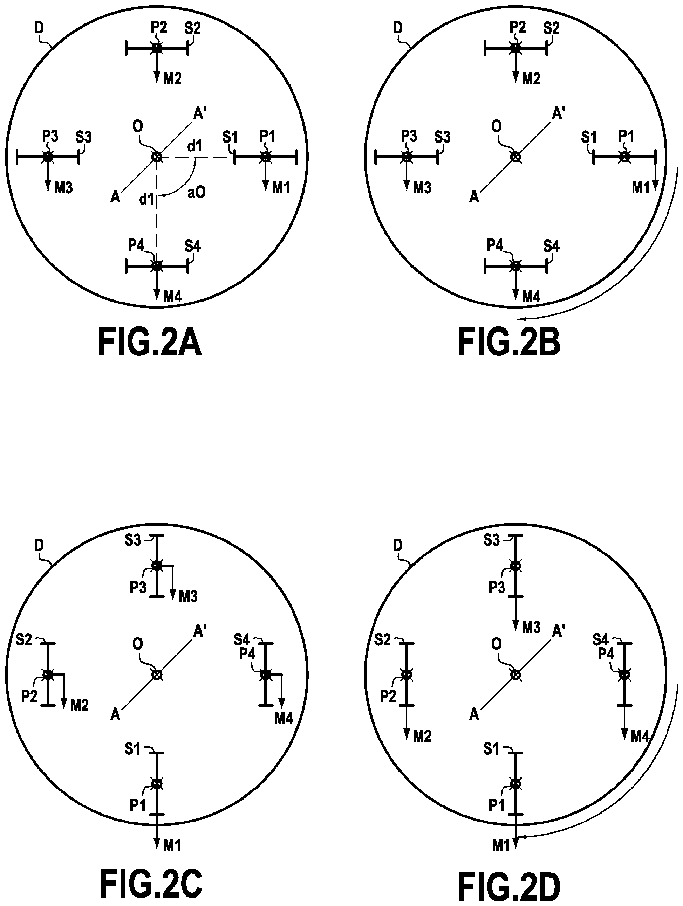

Les figures 2A à 2D représentent un premier aspect du principe de fonctionnement d'un dispositif rotatif dans lequel des masses Mi créent des couples moteurs provoquant la rotation d'un disque D.

Les figures 2A à 2D montrent le disque D de centre O pouvant tourner autour d'un axe de rotation central AA', l'axe AA' étant perpendiculaire au disque D et passant par le centre O du disque. Le disque D comprend également une pluralité I de barres support Si (i étant l'index de 1 à I, on considère dans le cas présent quatre barres support S1, S2, S3, S4) fixées au disque D en I points de fixation Pi (ici P1, P2, P3, P4) au milieu de chaque barre Si. Les barres sont fixes et parallèles entre elles. Les points de fixation Pi sont essentiellement disposés à une distance d1 du centre O du disque. Pour chaque paire de points Pi adjacents, un angle a0 est formé entre ces deux points et le centre O du disque D. L'angle a0 formé pour chaque paire de points Pi adjacents est sensiblement le même.

Une masse Mi (ici M1, M2, M3, M4) est fixée sur chaque barre Si et peut être placée de part et d'autre du point de fixation Pi de la barre Si, produisant un couple soit en sens horaire, soit en sens antihoraire.

Dans la figure 2A, les barres Si sont horizontales et chaque masse Mi est agencée au milieu (en un point Pi) de la barre Si correspondante. Le système est en équilibre et le disque D immobile.

Dans la figure 2B, une des masses, par exemple la masse M1, a été déplacée et se trouve à l'une des extrémités de la barre S1, à droite du point P1. La masse M1 produit alors un couple C1 autour du point P1 entraînant le disque D en rotation. Le disque D tourne dans le même sens que le couple C1 et ce quelle que soit la position de la barre B1 (en haut, en bas, à droit, à gauche) sur le disque D.

Dans la figure 2C, le système est de nouveau en équilibre, le disque D ayant effectué une rotation de 90 degrés (un quart de tour). Les barres S1 à S4 sont en position verticale, les masses M2 à M4 étant toujours fixées au milieu des barres S2 à S4 respectivement.

Dans la figure 2D, les masses M1 à M4 ont été déplacées d'un même côté des barres S1 à S4 respectives. Un couple C quatre fois plus important a été obtenu jusqu'à un nouvel équilibre du système dans lequel les quatre barres Si sont en position verticale avec les masses Mi pendant d'une des extrémités. Le disque D a encore, comme représenté sur la figure 2D, effectué une rotation de 90 degrés (un quart de tour).

Dans la configuration présente, lorsque les barres Si sont directement fixées sur le disque, la rotation du disque est limitée par le nombre de barres utilisées pour engendrer la rotation du disque et l'orientation initiale des barres.

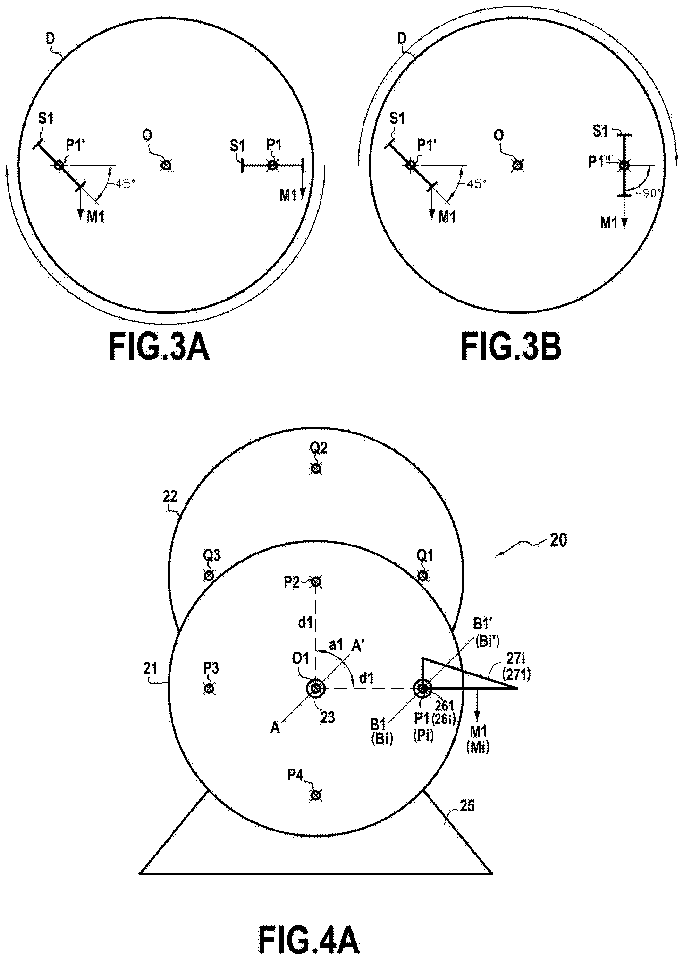

Les figures 3A et 3B représentent un second aspect du principe de fonctionnement d'un dispositif rotatif.

En effet, comme illustré aux figures 2A à 2D, l'angle de rotation du disque D est limité par le nombre de barres, le couple produit par chacune des barres et l'orientation initiale des barres. Il pourrait être souhaitable d'augmenter l'angle de rotation du disque et par là même le nombre de tours effectués par le disque. Un engrenage réducteur (non montré), appelé par la suite « réducteur », peut être utilisé pour modifier le rapport entre la vitesse angulaire de rotation de la barre Si et celle du disque D afin d'augmenter l'angle de rotation du disque D. Le réducteur, typiquement monté sur l'arbre de rotation de la barre et de l'autre côté du disque, relie ainsi la barre Si au disque D.

La figure 3A illustre de façon schématique la rotation d'une même barre S1 reliée à un réducteur ayant un rapport de 1/4. Dans sa position initiale P1, la barre est horizontale. Le déplacement de la masse M1 à l'extrémité droite de la barre entraine le disque D en rotation de 180 degrés jusqu'à une position intermédiaire P1'. On constate que, pour un rapport d'engrenage de 1/4 et pour une rotation du disque D de 180 degrés, la barre S1 a effectué une rotation de -45 degrés.

Pour donner un ordre de grandeur, le changement d'inclinaison de la barre après une certaine rotation du disque, par exemple lorsque le disque tourne d'un angle de 180 degrés et que la barre passe d'une position initiale P1 à une position intermédiaire P1', peut être déterminé en soustrayant à l'angle de départ de la barre l'angle de rotation du disque multiplié par le rapport de l'engrenage. Par exemple, si dans la position P1, la barre a un angle par rapport à l'horizontale de 0 degrés, que le disque a tourné de 180 degrés et que le rapport d'engrenage est de 1/4, l'angle final de la barre est égal à = 0 - (180*1/4) = 0 - 45 = -45 degrés.

La figure 3B illustre de façon schématique la barre S1 après une rotation supplémentaire du disque D de 180 degrés, lors du passage de la position intermédiaire P1' à la position finale P1" (qui correspond ici à la position initiale P1). La masse M1 a alors continué d'entrainer le disque D en rotation et on peut constater que, pour un rapport d'engrenage de 1/4 et pour une rotation du disque D de 180 degrés, la barre S1 a effectué une rotation supplémentaire de -45 degrés, ce qui correspond à une rotation totale de -90 degrés.

Dans le cas présent, le disque D a effectué une rotation d'un tour complet avec un couple exercé par une seule barre, au lieu d'un quart de tour seulement comme montré à la figure 2C. En conséquence, si une masse Mi est fixée à une extrémité d'une barre Si, le couple C peut continuer de s'exercer sur le disque D plus longtemps jusqu'à ce que la barre Si atteigne une position d'équilibre vertical.

Le nombre de tours effectués dépend donc de la position initiale des barres, de la valeur du rapport d'engrenage qui doit être inférieur à un (1), et de la valeur du couple produit par la rotation d'une barre. La valeur du couple, et donc la puissance, dépend de la valeur de la masse suspendue à la barre, de la distance de la masse par rapport au point de fixation et du nombre de barres utilisées.

Les figures 4A à 4D représentent différentes vues d'un dispositif rotatif 20 selon un premier mode de réalisation.

La figure 4A représente une vue de face du dispositif 20. Le dispositif 20 comprend un premier disque (ou disque de couple) 21, un second disque (ou disque de maintien) 22, un arbre de rotation central 23 du premier disque, un arbre de rotation central 24 du second disque (non-montré à la figure 4A), un élément de support 25, une pluralité I d'arbres de rotation périphériques 26i et une même pluralité I de supports de masse 27i, dont seul l'arbre 261 et le support 271 sont montrés à la figure 4A pour des raisons de clarté.

Le premier disque 21 comprend un centre O1 et peut tourner autour d'un axe de rotation central AA' s'étendant le long de l'arbre de rotation 23. L'axe AA' est alors perpendiculaire au disque 21 et passe par le centre O1. Chaque support de masse 27i est fixé, par l'arbre de rotation périphérique 26i respectif, au disque 21 en un point de fixation Pi (ici P1, P2, P3, P4). Les points de fixation Pi sont chacun essentiellement disposés à une même distance d1 du centre O1 du disque. Pour chaque paire de points Pi adjacents, un angle a1 est formé entre ces deux points et le centre O du disque D. L'angle a1 formé pour chaque paire de points Pi adjacents est sensiblement le même.

Les arbres de rotation périphériques 26i sont fixés de façon à pouvoir tourner autour des axes de rotation périphériques BiBi' (B1B1', B2B2', B3B3', B4B4'), chaque axe BiBi' étant perpendiculaire au disque 21 et passant par le point de fixation Pi correspondant. Chaque support de masse 27i comprend une masse Mi (M1, M2, M3, M4).

Les arbres de rotation 26i sont chacun équipés d'une roue libre 28i transmettant un couple dans un sens et tournant librement dans l'autre. Cette roue libre est reliée à un arbre de couplage 29i traversant le disque 21 et qui reçoit un réducteur 30i (tous non-montrés à la figure 4A).

D'une façon similaire, le second disque 22 comprend un centre O2 et peut tourner autour d'un axe de rotation central CC' s'étendant le long de l'arbre de rotation 24. L'axe CC' est alors perpendiculaire au disque 22 et passe par le centre du disque O2. Le second disque 22 est monté sur l'élément de support 25. En outre, le second disque 22 comprend quatre points de fixation Qi (ici, Q1, Q2, Q3, Q4) qui seront expliqués plus loin.

Comme on peut le noter à la figure 4A, les disques 21, 22 sont décalés axialement l'un de l'autre afin que leurs axes de rotation centraux AA', CC' ne coïncident pas. Ce décalage peut être horizontal, vertical, diagonal, etc. Cependant, la configuration dans laquelle les disques 21, 22 sont décalés verticalement l'un par rapport l'autre permet de mieux supporter le poids du dispositif, comme décrit ultérieurement.

Comme il sera expliqué plus loin, la rotation des supports de masse 27i autour des arbres de rotation 26i crée un couple qui est transmis au réducteur 30i correspondant à travers la roue libre 28i et l'arbre de couplage 29i. Ensuite, le réducteur 30i transfère la rotation au premier disque 21. Le second disque 22 est relié au premier disque 21 et tourne avec le premier disque 21.

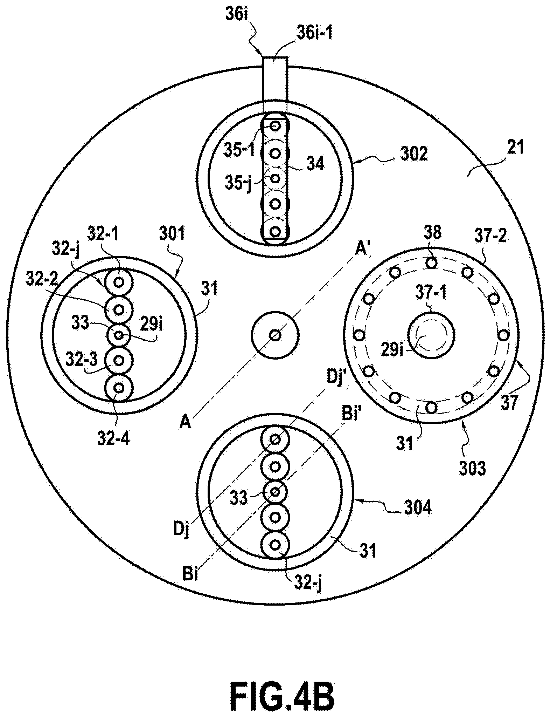

La figure 4B est une vue de derrière du premier disque 21. Les réducteurs 30i (ici, 301, 302, 303, 304) sont montés sur les arbres de couplage 29i correspondants. Bien que chaque réducteur 30i comprenne les mêmes éléments, chaque réducteur est montré différemment à la figure 4B afin de pouvoir mieux en distinguer les différentes caractéristiques, immatérielles et matérielles selon différents plans. Les réducteurs 30i sont des trains d'engrenages coaxiaux montés sur un plan vertical, c'est-à-dire dans lequel les axes de rotation des pièces d'entrée et de sortie de rotation sont coaxiaux.

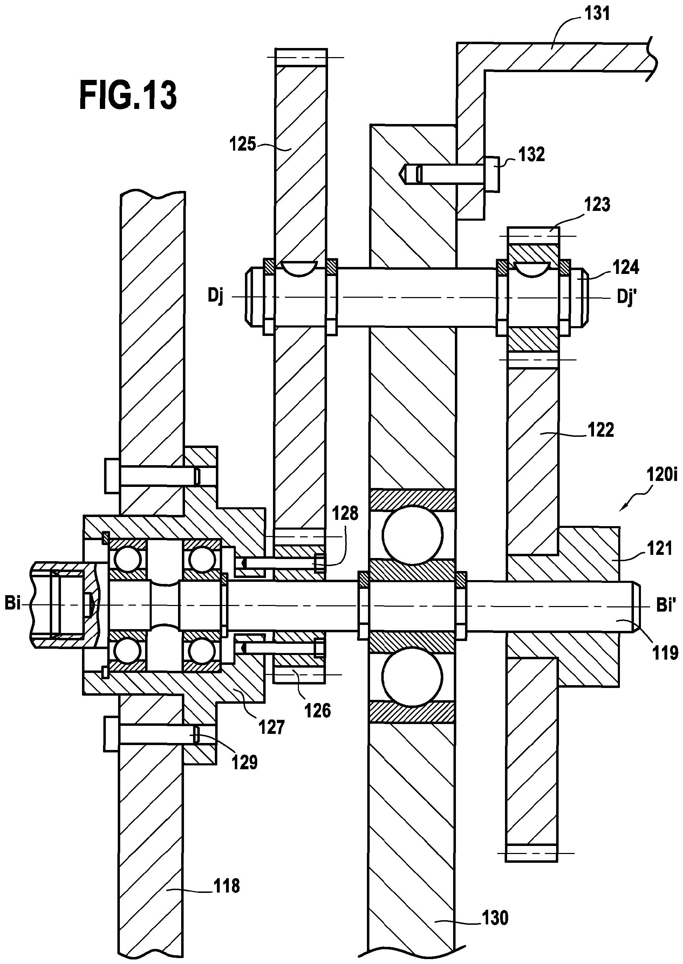

On notera que dans d'autres modes de réalisation (comme il sera expliqué plus loin en relation avec la figure 13), les réducteurs peuvent être constitués de trains d'engrenages qui ne sont pas coaxiaux mais décalés verticalement.

Comme montré en relation avec le réducteur 301, le réducteur comprend une couronne périphérique à engrenage interne ou « couronne périphérique » 31, quatre engrenages satellites 32-j, j étant l'index de l'engrenage satellite, ici 1 à 4 (32-1, 32-2, 32-3, 32-4) et un engrenage de sortie 33 situés tout autour de l'arbre de couplage 29i. La couronne périphérique 31 est reliée à l'arbre de couplage 29i par une frette de centrage (non-montrée sur le réducteur 301) et constitue l'entrée du réducteur. L'engrenage de sortie 33 se situe autour de l'arbre de couplage 29i et constitue la sortie du réducteur. Enfin, les satellites 32-1, 32-2 sont agencées entre la couronne périphérique 31 et l'engrenage de sortie 33 d'un côté, et les satellites 32-3, 32-4 sont agencées entre la couronne périphérique 31 et l'engrenage de sortie 33 de l'autre côté. Ces engrenages satellites 32-j transfèrent le mouvement de la couronne 31 à l'engrenage de sortie 33. La couronne périphérique 31, les satellites 32-j et l'engrenage de sortie 33 sont essentiellement situés dans un même plan vertical. L'utilisation de quatre engrenages satellites 32-j permet à la couronne périphérique 31 et à l'engrenage de sortie 33 de tourner dans le même sens, afin que l'arbre de rotation périphérique 26i et le premier disque 21 tournent dans le même sens.

Comme montré en relation avec le réducteur 302, le réducteur comprend en outre un porte satellite 34 sur lequel les satellites 32-j sont fixés par des tiges de maintien 35-j traversant respectivement les centres des satellites 32-j. Une pièce de verrouillage 36i, dont seule une première portion 36i-1 s'étendant verticalement au-dessus du réducteur 302 est visible dans la figure 4B, est reliée au porte satellite 34 par la tige 35-1 fixant l'axe de rotation du satellite 32-1 sur le porte satellite 34. Le porte satellite 34 et la première portion 36i-1 de la pièce de verrouillage 36i sont respectivement dans des plans situés devant et derrière le plan vertical comprenant la couronne 31, les satellites 32-1, 32-2, 32-3, 32-4 et l'engrenage de sortie 33.

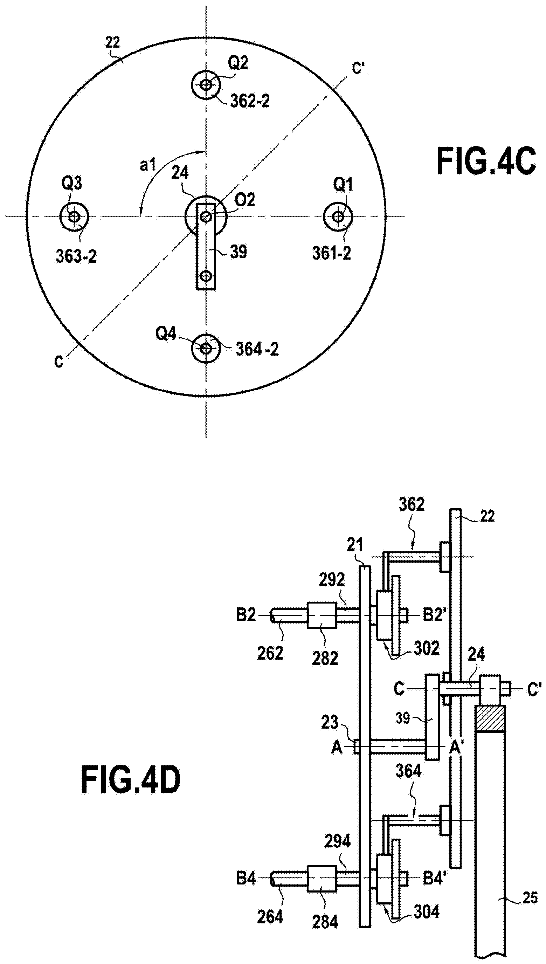

La pièce de verrouillage 36i comprend également une deuxième portion horizontale 36i-2, montrée plus particulièrement aux figures 4C et 4D, dont l'une des extrémités est fixée à l'extrémité supérieure de la première portion 36i-1 et dont l'autre extrémité est fixée au second disque 22. La pièce de verrouillage 36i permet donc de verrouiller la position du porte satellite 34 par rapport au deuxième disque 22 et par conséquent, de fixer la position des satellites.

Comme montré en relation avec le réducteur 303, le réducteur comprend en outre une pièce d'entrée de rotation ou « pièce de fixation » 37 qui relie l'arbre de couplage 29i à la couronne périphérique 31. La pièce de fixation 37 comprend une première portion 37-1 ou « frette de centrage » qui est fixée et centrée sur l'arbre de couplage et une deuxième portion 37-2 qui est une pièce cylindrique qui porte la couronne périphérique 31 et à laquelle elle est fixée par des vis 38.

Enfin, comme montré en relation avec le réducteur 304, chaque satellite 32-j (32-1, 32-2, 32-3, 32-4) peut tourner autour de son propre axe de rotation satellite DjDj' tout en suivant la rotation du premier disque 21 autour de son axe AA'. En revanche, la couronne périphérique 31 et l'engrenage de sortie 33 peuvent tourner autour de l'axe BiBi'tout en suivant la rotation du premier disque 21 autour de son axe AA'. Par contre, les satellites 32-j (32-1, 32-2, 32-3, 32-4) ne peuvent pas tourner autour de l'axe BiBi' car ils sont bloqués dans une position prédéterminée, ici verticale, par le porte satellite 34 et la pièce de verrouillage 36i.

La figure 4C représente une vue de face du second disque 22 comprenant le centre O2, l'arbre de rotation 24, et l'axe de rotation CC'. En outre, le second disque 22 comprend les quatre points de fixation Qi (ici, Q1, Q2, Q3, Q4), les deuxièmes portions des pièces de verrouillage horizontales 36i-2 (ici, 361-2, 362-2, 363-2, 364-2) et une pièce de raccordement 39. Les points de fixation Qi correspondent essentiellement aux points de fixation Pi du premier disque, les distances d1 par rapport au centre du disque et les angles a1 formés entre deux points de fixation consécutifs et le centre du disque étant les mêmes.

Les deuxièmes portions 36i-2 des pièces de verrouillage 36i s'étendent perpendiculairement au plan de la figure et sont fixées par l'une de leurs extrémités aux points de fixation Qi et par l'autre extrémité aux extrémités supérieures des premières portions 36i-1 des pièces de verrouillage des engrenages satellites, comme montré à la figure 4D. La pièce de verrouillage 36i permet d'immobiliser les satellites 32-1, 32-2, 32-3, 32-4 de chaque réducteur agencé sur le premier disque 21 car le second disque 22 tourne avec la même vitesse que le premier disque.

Enfin, la pièce de raccordement 39 relie l'arbre de rotation 23 du premier disque à l'arbre de rotation 24 du second disque. La pièce de raccordement 39 a principalement une fonction de support de l'arbre de rotation du premier disque.

La figure 4D représente une vue de côté du dispositif 20 de la figure 4A et montre les disques 21, 22, les arbres de rotation centraux 23, 24, l'élément de support 25, les arbres de rotation périphériques 262, 264, les roues libres 282, 284, les arbres de couplage 292, 294, les réducteurs 302, 304, les pièces de verrouillage 362, 364, la pièce de raccordement 39 et enfin les axes de rotation AA', B2B2', B4B4', CC".

Comme on peut le voir, l'élément de support 25 est couplé à l'arbre de rotation 24 du second disque 22 pour le maintenir dans une position verticale, tout en permettant au second disque 22 de tourner autour de son axe CC'. Les disques 21, 22 étant reliés par la pièce de raccordement 39, et dans une moindre mesure par les pièces de verrouillage 36i (362, 364), le premier disque 21 est ainsi supporté d'une façon indirecte par l'élément de support 25.

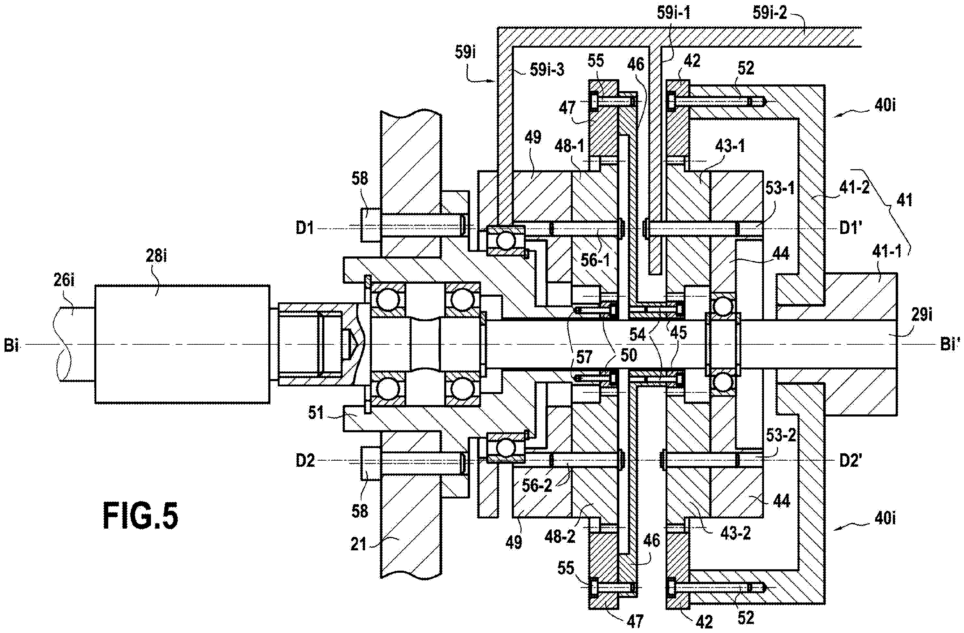

La figure 5 représente une vue en coupe détaillée d'un réducteur 40i selon un mode de réalisation. Plus particulièrement, la figure 5 représente le premier disque 21, un arbre de rotation périphérique 26i, une roue libre 28i, un arbre de couplage 29i et le réducteur 40i. Pour rappel, l'arbre de rotation périphérique 26i est entrainé en rotation par un support de masse 27i (non-montré à la figure 5).

Le réducteur 40i comprend une pièce d'entrée de rotation 41, une couronne périphérique à engrenage interne primaire 42, deux engrenages satellites primaires 43-1, 43-2, un premier porte satellite 44, un engrenage de sortie 45, une pièce intermédiaire de transition 46, une couronne périphérique à engrenage interne secondaire 47, deux engrenages satellites secondaires 48-1, 48-2, un deuxième porte satellite 49, un engrenage de sortie 50, et une pièce de sortie de rotation 51. Le réducteur 40i comprend ainsi deux étages de réduction, le premier étage comprenant les éléments 42 à 45, le deuxième étage comprenant les éléments 47 à 50, la pièce intermédiaire 46 formant à la fois la pièce de sortie de rotation du premier étage et la pièce d'entrée de rotation du deuxième étage de réduction.

La pièce d'entrée 41 comprend une première portion 41-1 ou « frette de centrage » qui est fixée et centrée sur l'arbre de couplage 29i et une deuxième portion 41-2 qui est une pièce cylindrique qui porte la couronne périphérique 42 et à laquelle elle est fixée par des vis 52. La pièce d'entrée 41 transmet ainsi le mouvement rotatif de l'arbre de couplage 29i à la couronne périphérique primaire 42.

La couronne périphérique primaire 42 est en contact avec les extrémités extérieures des engrenages satellites primaires 43-1, 43-2 qui sont aptes à tourner autour de leurs axes de rotation D1D1' et D2D2' respectifs. En outre, les satellites 43-1, 43-2 sont fixés en leurs centres, par exemple au moyen de tiges de maintien 53-1, 53-2 respectivement, au premier porte satellite 44. On note ici que le porte satellite 44 est monté de façon à pouvoir faciliter la rotation de l'arbre de couplage par rapport au porte satellite et peut comprendre un roulement à billes.

En outre, on note qu'au lieu de quatre satellites 32-j comme montré en relation avec la figure 4B, chaque étage ne comprend que deux satellites 43-1, 43-2, 48-1, 48-2. Dans ce cas, la couronne périphérique 42 et l'engrenage de sortie 45 tournent dans des sens opposés mais le deuxième étage de réduction permet d'obtenir une rotation du premier disque 21 dans le même sens que l'arbre de rotation périphérique 26i. Les engrenages satellites primaires 43-1, 43-2 sont en contact, à leurs extrémités intérieures, avec l'engrenage de sortie 45 qui a une extrémité intérieure apte à tourner autour de l'arbre de couplage 29i. La pièce intermédiaire 46 comprend une extrémité intérieure couplée à l'engrenage de sortie 45 par des vis 54 et une extrémité extérieure couplée à la couronne périphérique secondaire 47 par des vis 55. La pièce intermédiaire 46 assure ainsi la liaison entre les deux étages de réduction du réducteur 40i.

De même, la couronne périphérique secondaire 47 est en contact avec les extrémités extérieures des engrenages satellites secondaires 48-1, 48-2 qui sont aptes à tourner autour de leurs axes de rotation D1D1' et D2D2' respectifs. En outre, les satellites 48-1, 48-2 sont fixés en leurs centres, par exemple au moyen de tiges de maintien 56-1, 56-2 respectivement, au deuxième porte satellite 49. De même, le porte satellite 49 est monté de façon à pouvoir faciliter la rotation de l'arbre de couplage par rapport au porte satellite et peut comprendre un roulement à billes.

Les engrenages satellites secondaires 48-1, 48-2 sont en contact, à leurs extrémités intérieures, avec l'engrenage de sortie 50 qui est apte à tourner autour de l'arbre de couplage 29i et couplée à la pièce de sortie 52 par des vis 57. La pièce de sortie 51 est couplée au premier disque 21 par une pluralité de boulons 58 et comprend un roulement à billes pour faciliter la rotation du premier disque autour de l'arbre de couplage 29i. Ainsi, le premier disque 21 est entrainé en rotation par le réducteur 40i et l'arbre de rotation périphérique 26i, celui-ci étant entrainé en rotation par des supports de masse.

Similairement à ce qui a été expliqué en relation avec les figures 4B à 4D, une pièce de verrouillage 59i relie les portes satellites 44, 49 du réducteur 40i au second disque 22 afin d'empêcher les rotations des portes satellites 44, 49 et de verrouiller la position des satellites 43-1, 43-2 et 48-1, 48-2 sans entraver leur rotation autour des axes D1D1', D2D2'. La pièce de verrouillage 59i comprend alors une première portion verticale 59i-1 relié au porte satellite 44, une portion horizontale 59i-2 relié au second disque 22, et une deuxième portion verticale 59i-3 relié au porte satellite 49, les extrémités supérieures des portions 59i-1, 59i-3 étant reliés à la portion horizontale 59i-2.

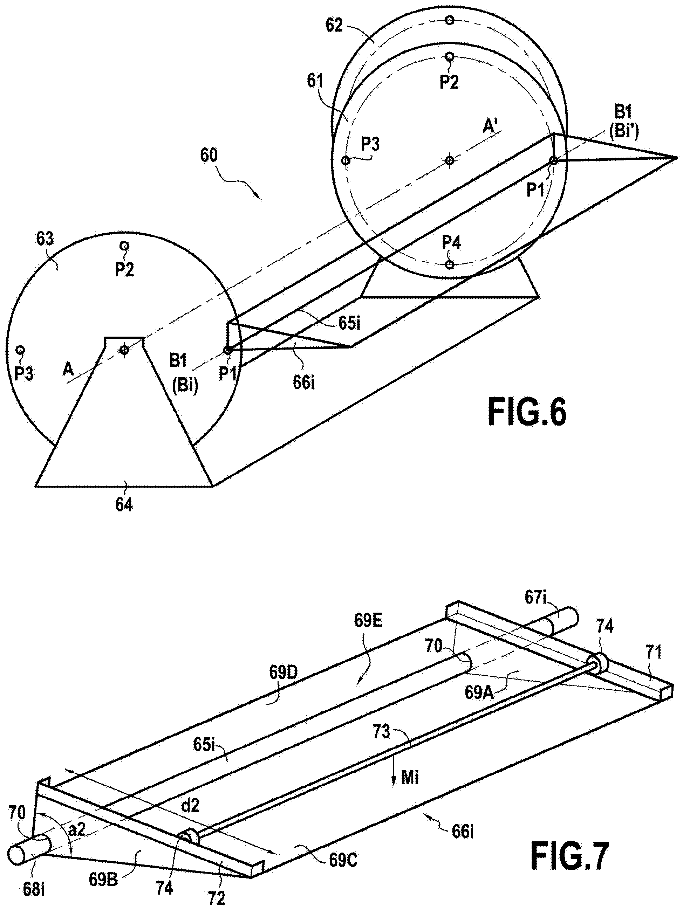

La figure 6 représente une vue en perspective d'un dispositif rotatif 60 selon un autre mode de réalisation de l'invention. Le dispositif rotatif 60 comprend, en plus d'un premier disque 61 et un deuxième disque 62, un troisième disque (ou disque de support) 63 agencé en regard du premier disque 61 et ayant le même axe de rotation central AA'.

Les disques 61, 62 sont essentiellement les mêmes que les disques 21, 22 décrits en relation avec les figures 4A à 4D et ne seront pas décrit de nouveau. L'ensemble est monté sur un élément de support 64 qui maintient le deuxième disque 62, comme décrit en relation avec la Fig. 4D, et le troisième disque 63.

Une pluralité I d'arbres de rotation périphériques 65i s'étendent entre les disques 61, 63, et sont montés sur des points de fixation Pi. Une même pluralité I de supports de masses 66i (dont un seul est montré à la figure 6 pour des raisons de clarté) sont montés sur les arbres de rotation 65i qui s'étendent selon des axes de rotation périphériques BiBi'.

On note ici qu'un arbre de rotation central pourrait s'étendre entre les centres des disques 61, 63, par exemple, pour mieux supporter ou pour aider la rotation des disques mais, dans ce cas, les dimensions des supports de masse devraient être restreintes afin de ne pas heurter l'arbre de rotation central lors de leur rotation propre.

La figure 7 représente une vue en perspective d'un support de masse 66i selon un mode de réalisation. Dans ce mode de réalisation, le support de masse a la forme d'un plateau triangulaire.

Une extrémité de l'arbre de rotation 66i comprend une roue libre 67i, configurée pour faire face au premier disque 61, tandis que l'autre extrémité de l'arbre de rotation est un simple palier 68i, configuré pour faire face au troisième disque 63. Par conséquent, le troisième disque 63 sert essentiellement à supporter le poids des supports de masse qui peut être de plusieurs centaines de kilos ou plus, selon l'application considérée.

Le support de masse 66i comprend cinq faces 69A à 69E. Les faces 69A, 69B sont des plaques en forme de triangle à angle droit disposées de chaque extrémité du support de masse et faisant face aux disques 61, 63 respectivement. Les faces 69A, 69B comprennent des trous 70 par lesquels l'arbre de rotation 65i peut passer. La face 69C est une plaque s'étendant horizontalement, agencée vers le bas, et relie les côtés inferieurs horizontaux des faces 69A, 69B. La face 69D est une plaque s'étendant verticalement, agencée latéralement, et relie les côtés verticaux des faces 69A, 69B. La face 69D forme un angle a2 d'environ 90 degrés avec la face 69C. Enfin, la face 69E est ouverte et forme l'hypoténuse de la forme triangulaire. L'espace intérieur formé par les faces 69A à 69E est vide pour permettre l'installation et le déplacement des masses.

Les faces 69A, 69B comprennent, sur leur côté supérieur, des rails 71, 72 disposés le long de l'hypoténuse des triangles à angle a2 essentiellement droit (90 degrés). Une barre de masse 73 comprenant des roues 74 est supportée par les rails 71, 72 et peut se déplacer dans un mouvement de va et vient dans la direction d2. Une masse Mi, représentée schématiquement par une flèche, peut être constituée d'une masse accrochée à la barre 73 ou être constituée simplement par la masse de la barre elle-même.

On peut remarquer qu'après quelques rotations du dispositif, les supports de masse se trouveront dans des positions verticales, comme montré aux figures 2D et 3B. Le dispositif s'arrêtera car il n'y aura plus de couple provoqué autour des axes de rotation périphériques BiBi'. Afin de continuer à faire tourner le dispositif, il faudrait mettre en œuvre un moyen qui permet de « réinitialiser » le système en recréant un couple autour d'un ou plusieurs axes de rotation périphérique, par exemple en changeant l'inclinaison du support de masse afin de recréer de l'énergie potentielle gravitaire et d'augmenter le nombre de tours pouvant être effectués par le dispositif.

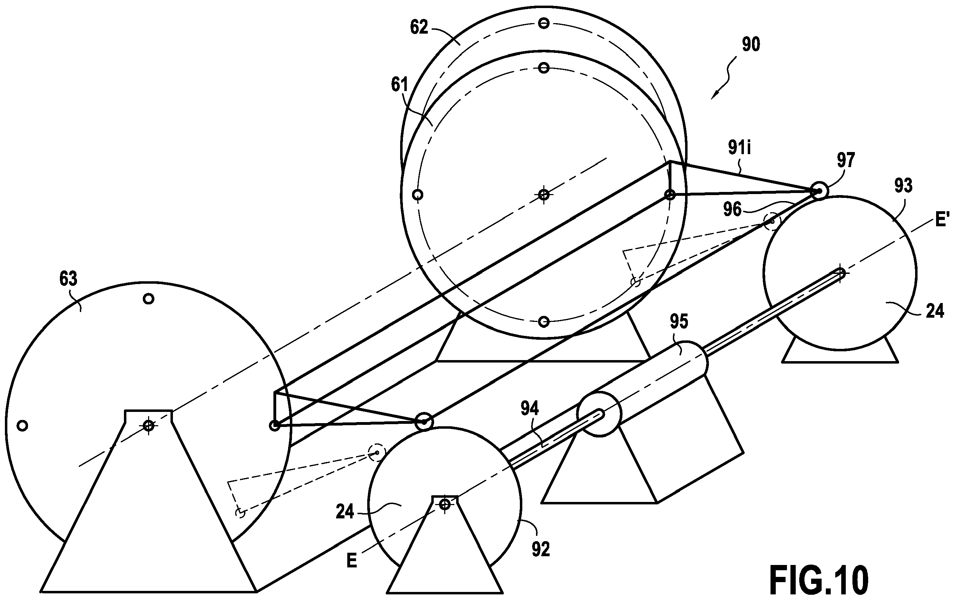

La figure 10 représente une vue en perspective d'un dispositif rotatif 90 selon un autre mode de réalisation qui permet la réinitialisation du couple du support de masse. Le dispositif comprend les disques 61, 62, 63, décrits en relation avec la figure 6, des supports de masse 91i (dont un seul est montré à la figure 10 pour des raisons de clarté) et deux cames « extérieures » 92, 93.

Les cames 92, 93 sont reliées entre-elles par un arbre de rotation 94, qui est rotatif autour d'un axe de rotation EE'. Un moteur 95 est relié à l'arbre de rotation 94 pour le faire tourner, et les cames 92, 93 en conséquence.

Le support de masse 91i comprend des tiges 96 et des galets 97 disposés sur les extrémités extérieures du support afin de venir en contact avec les cames 92, 93. La rotation des cames autour de l'axe EE' permet de faciliter la réinitialisation de l'angle d'inclinaison du support de masse 91i. Les galets 97 ne glissent pas le long de la périphérie des cames 92, 93. Au contraire, la position du galet 97 est fixe par rapport à la périphérie du disque. Le moteur 95 entraine en rotation l'arbre de rotation 94 et les cames 92, 93 dans un sens (ici, antihoraire). La rotation des cames extérieures annule la masse gravitaire du support et le couple du support autour de son axe périphérique, modifie la trajectoire des galets et réinitialise l'angle d'inclinaison du support.

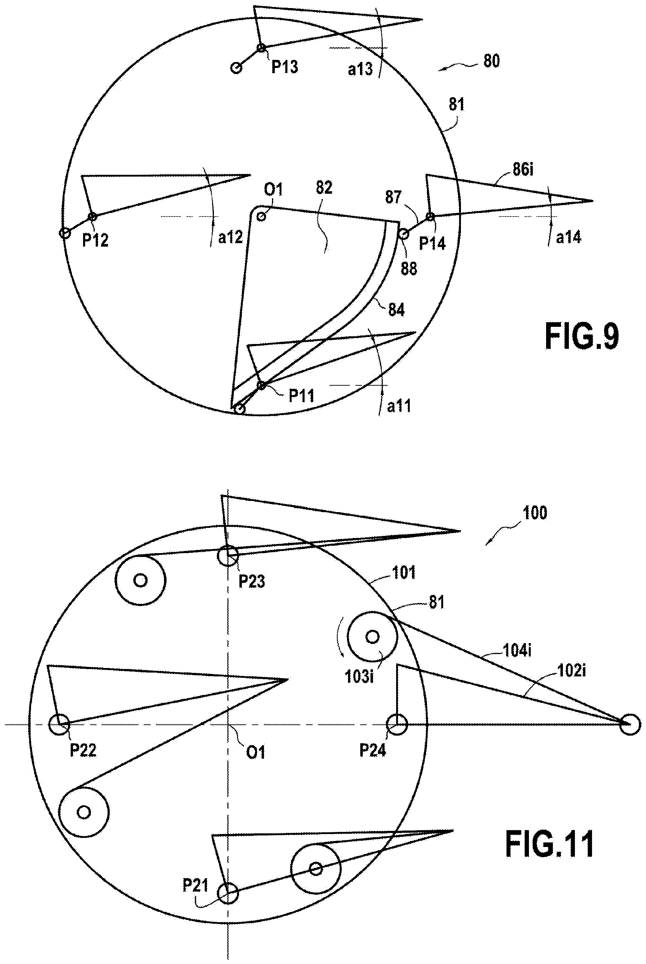

La figure 11 représente un dispositif de rotation 100 selon un autre mode de réalisation qui permet la réinitialisation du couple d'un support de masse. Le dispositif comprend un premier disque 101, une pluralité I de supports de masses 102i et une même pluralité I de dispositifs motorisés 103i agencés sur le premier disque 101. Chaque dispositif motorisé 103i est relié à l'extrémité extérieure d'un support de masse correspondant par un câble 104i.

Dans cette figure, le même support de masse 102i et le même dispositif motorisé 103i sont représentés pour quatre positions P21, P22, P23, et P24 différentes lors de la rotation du premier disque autour de l'axe de rotation AA'. Dans cette figure, la position P21 est directement verticale en-dessous du centre O1 du premier disque, à un angle de 0 degrés avec la verticale, P22 est directement horizontale à gauche du centre O1, à un angle de 90 degrés avec la verticale, P23 est directement verticale au-dessus du centre O1, à un angle de 180 degrés avec la verticale, et P24 est directement horizontale à droit du centre O1, à un angle de 270 degrés avec la verticale.

Entre la position P24 (la position d'inclinaison minimale du plateau) et la position P21 (la position de réinitialisation de l'inclinaison du plateau), le dispositif motorisé 103i est enclenché et exerce une traction sur le câble 104i qui permet de modifier l'angle d'inclinaison du support de masse 102i. En revanche, entre les positions P21 et P24, le câble 104i reste tendu mais n'entrave pas la rotation du support de masse.

Afin de permettre au câble 104i de rester tendu tout en permettant au support de masse 102i de tourner dans un sens (ici, le sens horaire) et d'exercer un couple, le dispositif 103i comprend en outre une poulie sur laquelle coulisse le câble 104i, un ressort de rappel et une roue libre (non-montrés à la figure 11).

Dans un mode de réalisation, le moteur 103i est enclenché par la détection du passage par la position P24 du premier disque à l'aide de capteurs optiques ou électromagnétiques connus de l'homme du métier. De manière similaire, le moteur 103i est arrêté par la détection du passage par la position P21 du premier disque.

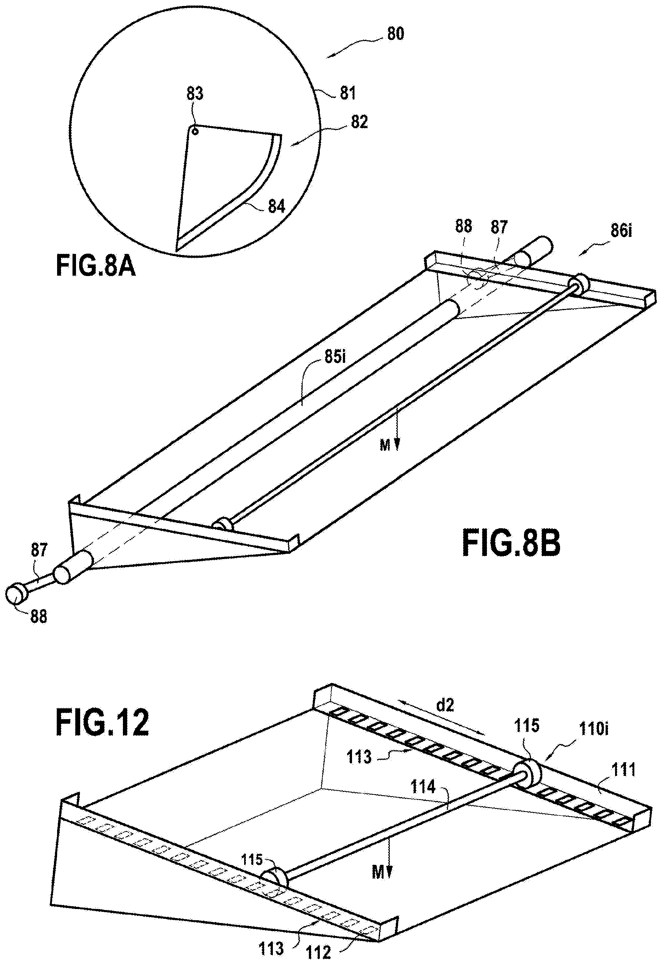

La figure 12 représente une vue en perspective d'un support de masse 110i selon un autre mode de réalisation, dans lequel le support comprend lui-même des moyens pour modifier le centre de gravité de sa masse M. Le support de masse 110i est similaire au support de masse décrit précédemment en référence à la figure 7. Le support de masse 110i comprend des rails 111, 112 et une pluralité de « cales électromagnétiques » 113 disposées selon la direction d2 sur chaque rail. Les cales 113 sont commandées à distance et se lèvent et s'abaissent en fonction d'un courant électrique de commande.

Une barre porte-masse 114 comprenant des roues 115 sur ses extrémités peut coulisser sur les rails 111, 112 grâce aux roues 115. La position de la barre porte-masse sur les rails peut être bloquée par deux cales électromagnétiques relevées de part et d'autre des deux roues 115, ou d'un seul côté, laissant la barre librement mobile entre une extrémité du rail et la cale.

Lorsque toutes les cales sont abaissées, la barre porte-masse 114 peut se déplacer le long des rails 111, 112 en raison de l'inclinaison du support de masse 110i. La position de la barre porte-masse est de nouveau bloquée lorsque d'autres cales sont à nouveau relevées.

Comme l'angle d'inclinaison du support peut changer, la barre porte-masse en libre mouvement peut s'éloigner de l'axe de rotation du plateau ou au contraire s'en rapprocher. Lorsqu'elle s'en rapproche, le couple diminue, lorsqu'elle s'en éloigne, le couple augmente. Lorsque la barre porte-masse est positionnée verticalement par rapport à l'axe de rotation du support de masse, le couple est nul, sans considérer la masse du support lui-même.

Il est donc possible de commander la valeur du couple appliqué au disque en libérant ou en bloquant la barre porte-masse pour une inclinaison prédéterminée du support de masse. La force motrice du système peut donc être commandée et ajustée à distance à l'aide de la force gravitaire.

De plus, l'inclinaison des supports de masse peut être choisie pour être relativement faible, comme décrit précédemment en relation avec l'exemple de la figure 7, afin de faciliter l'ajustement de la position de la barre porte-masse le long du rail.

La figure 13 représente une vue en coupe détaillée d'un réducteur 120i selon un mode de réalisation. Plus particulièrement, la figure 13 représente un premier disque 118, un arbre de couplage 119, et le réducteur 120i. Pour rappel, l'arbre de couplage 119 est entrainé en rotation par un support de masse monté sur un arbre de rotation périphérique relié à l'arbre de couplage par une roue libre (tous non-montrés à la figure 13).

Le réducteur 120i comprend une pièce d'entrée de rotation 121 ou « frette de centrage » qui est fixée et centrée sur l'arbre de couplage 119, un premier engrenage 122, un deuxième engrenage 123, un arbre de couplage additionnel 124, un troisième engrenage 125, un quatrième engrenage 126, et une pièce de sortie de rotation 127. Le quatrième engrenage 126 est relié à la pièce de sortie 127 par des vis 128, et la pièce de sortie 127 est couplée au premier disque 118 par une pluralité de boulons 129 et comprend un roulement à billes pour faciliter la rotation du premier disque autour de l'arbre de couplage 119.

Les engrenages 122, 126 sont rotatifs autour de l'axe BiBi'. Les engrenages 123, 125 sont rotatifs autour de l'axe DjDj' et sont couplés en leurs centres par l'arbre de couplage additionnel 124. Le premier engrenage 122 et le deuxième engrenage 123 sont reliés à leurs extérieurs, et le troisième engrenage 125 et le quatrième engrenage 126 sont reliés à leurs extérieurs également. En conséquence, l'engrenage 120i ne comprend pas de couronne périphérique, ni des engrenages satellites par rapport à celui montré en relation avec la figure 5.

En conséquence, la rotation de l'arbre de couplage 119 est transmise consécutivement à la pièce d'entrée de rotation 121, au premier engrenage 122, au deuxième engrenage 123, à l'arbre de couplage additionnel 124, au troisième engrenage 125, au quatrième engrenage 126, à la pièce de sortie 127, et au disque 118.

L'engrenage 120i comprend en outre une pièce de blocage 130 et une pièce de verrouillage 131 qui est liée à la pièce de blocage 130 par une vis 132. L'arbre de couplage additionnel 124 traverse la pièce de blocage 130 et peut tourner autour de l'axe DjDj' mais ne peut pas tourner autour de l'axe BiBi' à cause de la pièce de verrouillage 131, qui est reliée à un second disque, comme décrit en relation avec les figures 4B à 4D par exemple. L'arbre de couplage 119 traverse aussi la pièce de blocage 130 et peut tourner autour de l'axe BiBi.

Des modes de réalisation de l'invention concernent également un procédé de montage d'un dispositif de rotation gravitaire comme décrit ci-dessus.

Le procédé de montage comprend les étapes suivantes :
- une étape S1 de monter un premier disque, par exemple sur un support ;
- une étape S2 de monter au moins un arbre de rotation périphérique sur le premier disque, l'arbre de rotation périphérique étant disposé à distance d'un axe central (AA') du premier disque, apte à tourner autour d'un axe de rotation périphérique (BiBi'), parallèle à l'axe central et couplé au premier disque ;

- une étape S3 de monter un engrenage réducteur 30i, 40i; 120i entre l'arbre de rotation périphérique et le premier disque ;
- une étape S4 de monter des moyens de verrouillage pour fixer au moins une portion de l'engrenage réducteur dans une position fixe afin de l'empêcher de tourner autour de l'axe de rotation périphérique ;
- une étape S5 de monter une roue libre sur l'arbre de rotation périphérique ;
- une étape S6 de monter au moins un support de masse sur l'arbre de rotation périphérique ; et
- une étape S7 de monter des moyens pour modifier l'angle d'inclinaison du support de masse sur l'arbre de rotation périphérique.

Il sera compris que ces étapes peuvent être accomplies dans un ordre diffèrent. Par exemple, un support de masse peut être monté sur un arbre de rotation avant le montage de l'arbre sur le premier disque, l'engrenage réducteur peut être monté sur l'arbre de rotation après le montage de la roue libre, etc.

En outre, le procédé de montage peut comprendre des étapes de montage d'un deuxième disque sur le support, la connexion des moyens pour fixer les portions de l'engrenage réducteur au deuxième disque, le montage d'un troisième disque en face du premier, etc.

Il sera compris par l'homme du métier que les modes de réalisation décrits ci-dessus sont susceptibles de modifications, notamment comme suit.

On note ici qu'un système de récupération de l'énergie produite par la rotation du dispositif rotatif peut être couplé au dispositif rotatif, par exemple au niveau des arbres de rotation centraux.

Dans un mode de réalisation, le dispositif comprend un moteur couplé à chaque arbre de rotation périphérique, par exemple du côté externe du troisième disque, et apte à faire tourner l'arbre dans le sens opposé à la rotation du premier disque (ici, antihoraire). Le moteur peut être équipé de moyens de contrôle permettant de déclencher le moteur au moment approprié. Ces moyens de contrôle peuvent être par exemple un capteur qui détecte la position angulaire de l'arbre de rotation par rapport au centre des disques ou un minuteur réglé sur le temps de rotation du disque.

Dans un mode de réalisation, le dispositif comprend plusieurs moyens de modifier l'angle d'inclinaison, par exemple des cames intérieures et extérieures à la fois, une came intérieure et un moteur couplé à l'arbre de rotation, etc.

Bien que le dispositif rotatif ait été décrit dans ce qui précède comme comprenant une pluralité de supports de masse, il sera compris par l'homme du métier qu'un seul support de masse est suffisant pour faire tourner le dispositif, au moins partiellement, comme il a été vu en relation avec les figures 3A, 3B. Dans ce cas, une pluralité de moyens permettant de changer l'inclinaison du support peuvent être disposés autour du dispositif afin d'interagir régulièrement avec le seul support de masse.

En outre, il sera noté qu'il n'est pas nécessaire que les arbres de rotation du premier disque et du second disque soient reliés. En effet, les pièces de verrouillage peuvent être suffisantes pour supporter le premier disque et faire tourner le second disque selon le poids et les dimensions des disques.

En outre, il sera noté qu'au lieu de pièces de verrouillage reliées au second disque, les pièces de verrouillage peuvent être reliées à des points fixes du premier disque, à une couronne qui entoure le réducteur et tourne dans le sens opposé, à une rainure pratiquée dans un support, etc. Dans ce cas, le second disque n'est pas essentiel.

En outre, il sera noté que le second disque peut avoir son axe de rotation central coaxial avec l'axe de rotation central du premier disque.

Les supports de masse peuvent, bien entendu, avoir des formes diverses, par exemple être constitué d'une seul pièce, s'étendre sur deux dimensions seulement, comprendre des tubes interconnectés au lieu de plaques, etc.

En outre, le nombre d'engrenages satellites peut varier, selon le rapport d'engrenage, le nombre d'étages de réduction, etc. De même, le nombre d'étages de réduction peut varier.

Au lieu de cales électromagnétiques, comme montré à la figure 12, on pourrait imaginer une sorte de « courroie coulissante » sur laquelle une masse est fixée, et un moteur qui déplace cette courroie.

Dans un mode de réalisation, les pièces d'entrée et/ou de sortie de rotation sont des engrenages directement reliés aux arbres de rotation et/ou aux disques.

## Revendications

1. Dispositif de rotation gravitaire (20; 60; 80; 90; 100) comprenant :
- un premier disque (21; 61; 81; 101; 118) comprenant :
- un axe central (AA') autour duquel le disque est apte à tourner, et
- au moins un axe de rotation périphérique (BiBi') disposé à distance de et parallèle à l'axe central (AA') ;
- au moins un arbre de rotation périphérique (26i; 65i; 85i) disposé à distance de l'axe central (AA') du premier disque (21; 61; 81; 101), apte à tourner autour de l'axe de rotation périphérique (BiBi'), parallèle à l'axe central (AA') et couplé au premier disque (21; 61; 81; 101; 118) ; et
- au moins un support de masse (27i; 66i; 86i; 91i; 102i; 110i) monté sur l'arbre de rotation périphérique (26i; 65i; 85i);
**caractérisé en ce que** le support de masse comprend une masse (Mi) apte à être éloignée de l'arbre de rotation afin de produire un couple faisant pivoter l'arbre de rotation et par conséquent le premier disque et **en ce que** le dispositif comprend en outre :
- un engrenage réducteur (30i, 301, 302, 303, 304; 40i; 120i) du premier disque au support de masse, disposé entre l'arbre de rotation périphérique (26i; 65i; 85i) et le premier disque (21; 61; 81; 101 ; 118), comprenant une pièce d'entrée de rotation (37; 41; 121) reliée à l'arbre de rotation périphérique et une pièce de sortie de rotation (33; 51; 127) reliée au premier disque et coaxiales entre elles, l'engrenage réducteur permettant à la rotation de l'arbre de rotation périphérique d'être transmise au premier disque ;
- des moyens (34, 35i, 35i-1, 35i-2, 36i ; 44, 49, 531, 532, 561, 562, 59i, 59i-1, 59i-2, 59i-3; 130, 131, 132) pour fixer au moins une portion de l'engrenage réducteur dans une position fixe afin de l'empêcher de tourner autour de l'axe de rotation périphérique ;
- une roue libre agencée (28i; 67i) sur l'arbre de rotation périphérique (26i; 65i; 85i) ; et
- des moyens (82, 84, 87, 88 ; 92, 93, 94, 95, 96, 97 ; 103i, 104i ; 111, 112, 113, 114, 115) pour modifier l'angle d'inclinaison (a11, a12, a13, a14) d'un support de masse (86i; 91i ; 102i ; 110i) sur l'arbre de rotation périphérique (26i; 65i; 85i) par rapport à horizontale passant par l'axe de rotation périphérique (BiBi') de l'arbre.

2. Dispositif (20; 60; 80; 90; 100) selon la revendication 1, dans lequel :
l'engrenage réducteur comprend en outre:
- une couronne périphérique (31 ; 42, 47) reliée à la pièce d'entrée de rotation (41),
- un engrenage de sortie (33 ; 45, 50) relié à la pièce de sortie de rotation, et
- au moins un engrenage satellite (32-j, 32-1, 32-2, 32-3, 32-4 ; 43-1, 43-2, 48-1, 48-2) agencé entre la couronne périphérique (31; 42, 47) et l'engrenage de sortie (33; 45, 50) ; et
les moyens pour fixer au moins une portion de l'engrenage réducteur comprennent en outre des portes satellites (34; 43, 49) fixées aux engrenages satellites et des pièces de verrouillage (36; 59i) fixées aux portes satellites.

3. Dispositif (20; 60; 80; 90; 100) selon l'une des revendications 1 ou 2, comprenant en outre un second disque (22; 62) apte à tourner autour d'un axe central (CC') et couplé au premier disque (21; 61; 81; 101; 118) afin qu'une rotation du premier disque (21; 61; 81; 101; 118) entraine le second disque (22; 62) en rotation,
les moyens (34, 35i, 35i-1, 35i-2, 36i ; 44, 49, 531, 532, 561, 562, 59i, 59i-1, 59i-2, 59i-3; 130, 131, 132) pour fixer la portion de l'engrenage réducteur étant couplés au second disque (22; 62).

4. Dispositif (20; 60; 80; 90; 100) selon la revendication 3, dans lequel l'axe central (CC') du second disque (22; 62) est excentré par rapport à l'axe central (AA') du premier disque (21; 61; 81; 101; 118).

5. Dispositif (20; 60; 80; 90; 100) selon l'une des revendications 1 à 4, comprenant :
- au moins deux arbres de rotation périphériques (26i; 65i; 85i), chacun étant disposé à une distance (d1) sensiblement la même de l'axe central (AA') du premier disque et ayant un axe de rotation périphérique (BiBi', B1B1') parallèle à l'axe central (AA'), couplé au premier disque (21; 61; 81; 101) et équidistant angulairement (a1) par rapport au centre (O1) du premier disque (21; 61; 81; 101) ; et
- au moins deux supports de masse (27i; 66i; 86i; 91i; 102i ; 110i), chacun monté sur un arbre de rotation périphérique (26i; 65i; 85i) et ayant une masse (Mi) apte à être éloignée de l'arbre de rotation périphérique afin de produire un couple faisant pivoter l'arbre de rotation périphérique, et par conséquent le premier disque (21; 61; 81; 101).

6. Dispositif (20; 60; 80; 90; 100) selon l'une des revendications 3 à 5, dans lequel :
- le premier disque (21; 61; 81; 101; 118) comprend un arbre de rotation central (23), et
- le second disque (22; 62) comprend un arbre de rotation central (24),
les arbres de rotation centraux (23; 24) étant reliés par une pièce de raccordement (39).

7. Dispositif (20; 60; 80; 90; 100) selon la revendication 6, comprenant en outre un élément de support (25; 64) relié à l'arbre de rotation central (24) du second disque (22; 62) tout en permettant au premier disque (21; 61; 81; 101) et au second disque (22; 62) de tourner.

8. Dispositif (60; 80; 90; 100) selon l'une des revendications 1 à 7, comprenant en outre un troisième disque (63) agencé en face du premier disque (61; 81; 101), apte à tourner autour de l'axe central (AA') du premier disque (61; 81; 101) et supportant une extrémité du ou des arbres de rotation périphériques (65i; 85i).

9. Dispositif (90) selon la revendication 1, dans lequel les moyens pour modifier l'angle comprennent :
- au moins une came extérieure (92, 93) agencée en face de l'extrémité extérieure d'un support de masse (91i) et comprenant une surface de guidage, et
- un galet de roulement (97) agencé sur une surface extérieure d'un support de masse (91i) et apte à venir en contact avec la surface de guidage de la came (92, 93) pendant la rotation du premier disque (61), afin de guider la rotation du support de masse dans le sens opposé de la rotation du premier disque (61), grâce à la roue libre (67i) et de changer l'angle d'inclinaison du support de masse.

10. Dispositif (90) selon la revendication 9, comprenant en outre un moteur (95) relié à la came extérieure (92, 93) et apte à entrainer en rotation (94) la came autour d'un axe de rotation (EE') de la came dans le même sens de rotation que le premier disque (61).

11. Dispositif (20; 60; 80; 90; 100) selon l'une des revendications 1 à 10, dans lequel le support de masse (66i; 86i; 91i; 102i; 110i) comprend deux plaques de forme triangulaire (69A, 69B), agencées à distance l'une de l'autre et dans des plans parallèles, reliées l'une à l'autre par des éléments de support longitudinaux (69C, 69D), les côtés supérieurs des plaques comprenant des rails (71, 72 ; 111, 112) ; et
dans lequel une barre porte masse (73 ; 114) est supportée à ses deux extrémités par les rails et apte à se déplacer dans une direction (d2) le long des côtés supérieurs des plaques.

12. Dispositif (20; 60; 80; 90; 100) selon la revendication 11, dans lequel les rails (111, 112) du support de masse (110i) comprennent chacun une pluralité de cales électromagnétiques (113) aptes à se lever afin de bloquer le déplacement de la barre porte masse (114) et à se baisser afin de permettre le déplacement de la barre porte masse (114) le long des côtés supérieurs des plaques.

13. Procédé de rotation d'un dispositif de rotation gravitaire selon la revendication 1, comprenant les étapes de :
- éloigner la masse (Mi) d'un support de masse (27i; 66i; 86i; 91i; 102i; 110i) par rapport à l'arbre de rotation périphérique (26i; 65i; 85i) afin de produire un couple faisant pivoter l'arbre de rotation périphérique (26i; 65i; 85i), et par conséquent le premier disque (21; 61; 81; 101) ; et
- modifier (82, 84, 87, 88 ; 92, 93, 94, 95, 96, 97 ; 103i, 104i ; 111, 112, 113, 114, 115) l'angle d'inclinaison (a11, a12, a13, a14) d'un support de masse (86i; 91i; 102i ; 110i) sur l'arbre de rotation périphérique (26i; 65i; 85i) par rapport à l'horizontale passant l'axe de rotation périphérique (BiBi') de l'arbre.

14. Procédé de montage d'un dispositif de rotation gravitaire (20; 60; 80; 90; 100) selon la revendication 1, comprenant les étapes de :
- monter (S1) un premier disque (21; 61; 81; 101) comprenant :
- un axe central (AA') autour duquel le disque est apte à tourner, et
- au moins un axe de rotation périphérique (BiBi') disposé à distance de et parallèle à l'axe central (AA') ;
- monter (S2) au moins un arbre de rotation périphérique (26i; 65i; 85i) du premier disque au support de masse, disposé à distance de l'axe central (AA') du premier disque (21; 61; 81; 101), apte à tourner autour de l'axe de rotation périphérique (BiBi'), parallèle à l'axe central (AA') et couplé au premier disque (21; 61; 81; 101) ;
- monter (S3) un engrenage réducteur (30i, 301, 302, 303, 304; 40i; 120i) entre l'arbre de rotation périphérique (26i; 65i; 85i) et le premier disque (21; 61; 81; 101 ; 118), l'engrenage réducteur comprenant une pièce d'entrée de rotation (37; 41; 121) reliée à l'arbre de rotation périphérique et une pièce de sortie de rotation (33; 51; 127) reliée au premier disque et coaxiales entre elles, l'engrenage réducteur permettant à la rotation de l'arbre de rotation périphérique d'être transmise au premier disque ;
- monter (S4) des moyens (34, 35i, 35i-1, 35i-2, 36i ; 44, 49, 531, 532, 561, 562, 59i, 59i-1, 59i-2, 59i-3; 130, 131, 132) pour fixer au moins une portion de l'engrenage réducteur dans une position fixe afin de l'empêcher de tourner autour de l'axe de rotation périphérique ;
- monter (S5) une roue libre (28i; 67i) sur l'arbre de rotation périphérique (26i; 65i; 85i) ;
- monter (S6) au moins un support de masse (27i; 66i; 86i; 91i; 102i; 110i) sur l'arbre de rotation périphérique (26i; 65i; 85i), le support de masse ayant une masse (Mi) apte à être éloignée de l'arbre de rotation afin de produire un couple faisant pivoter l'arbre de rotation; et
- monter (S7) des moyens (82, 84, 87, 88 ; 92, 93, 94, 95, 96, 97 ; 103i, 104i ; 111, 112, 113, 114, 115) pour modifier l'angle d'inclinaison (a11, a12, a13, a14) du support de masse (86i;; 91i; 102i; 110i) sur l'arbre de rotation périphérique (26i; 65i; 85i) par rapport à l'horizontale passant par l'axe de rotation périphérique (BiBi') de l'arbre.

## Patentansprüche

1. Schwerkraftrotationsvorrichtung (20; 60; 80; 90; 100), umfassend:
- eine erste Scheibe (21; 61; 81; 101; 118), umfassend:
- eine Mittelachse (AA'), um die herum sich die Scheibe drehen kann, und
- wenigstens eine Umfangsrotationsachse (BiBi'), die in einem Abstand von und parallel zu der Mittelachse (AA') angeordnet ist,
- wenigstens eine Umfangsrotationswelle (26i; 65i; 85i), die im Abstand von der Mittelachse (AA') der ersten Scheibe (21; 61; 81; 101) angeordnet ist, geeignet ist, sich um die Umfangsrotationsachse (BiBi') zu drehen, zu der Mittelachse (AA') parallel verläuft und mit der ersten Scheibe (21; 61; 81; 101; 118) gekoppelt ist, und
- wenigstens einen Masseträger (27i; 66i; 86i; 91i; 102i; 110i), der an der Umfangsrotationswelle (26i; 65i; 85i) angebracht ist,
**dadurch gekennzeichnet, dass** der Masseträger eine Masse (Mi) umfasst, die geeignet ist, von der Rotationswelle entfernt zu werden, um ein Drehmoment zu erzeugen, das die Rotationswelle und folglich die erste Scheibe drehen lässt, und dass die Vorrichtung ferner umfasst:
- ein Untersetzungsgetriebe (30i, 301, 302, 303, 304; 40i; 120i) von der ersten Scheibe zum Masseträger, das zwischen der Umfangsrotationswelle (26i; 65i; 85i) und der ersten Scheibe (21; 61; 81; 101; 118) angeordnet ist, umfassend ein mit der Umfangsrotationswelle verbundenes Rotationseingangsteil (37; 41; 121) und ein mit der ersten Scheibe verbundenes Rotationsausgangsteil (33; 51; 127), welche koaxial zueinander sind, wobei das Untersetzungsgetriebe die Übertragung der Drehung der Umfangsrotationswelle auf die erste Scheibe ermöglicht,
- Mittel (34, 35i, 35i-1, 35i-2, 36i; 44, 49, 531, 532, 561, 562, 59i, 59i-1, 59i-2, 59i-3; 130, 131, 132), um wenigstens einen Abschnitt des Untersetzungsgetriebes in einer festen Position festzulegen, um zu verhindern, dass er sich um die Umfangsrotationsachse dreht,
- einen Freilauf (28i; 67i) an der Umfangsrotationswelle (26i; 65i; 85i), und
- Mittel (82, 84, 87, 88; 92, 93, 94, 95, 96, 97; 103i, 104i; 111, 112, 113, 114, 115) zum Verändern des Neigungswinkels (a11, a12, a13, a14) eines Masseträgers (86i; 91i; 102i; 110i) auf der Umfangsrotationswelle (26i; 65i; 85i) in Bezug auf die durch die Umfangsrotationsachse (BiBi') der Welle verlaufende Horizontale.

2. Vorrichtung (20; 60; 80; 90; 100) nach Anspruch 1, bei der:
das Untersetzungsgetriebe ferner umfasst:
- einen Umfangskranz (31; 42, 47), der mit dem Rotationseingangsteil (41) verbunden ist,
- ein Ausgangsgetriebe (33; 45, 50), das mit dem Rotationsausgangsteil verbunden ist, und
- wenigstens ein Planetengetriebe (32-j, 32-1, 32-2, 32-3, 32-4; 43-1, 43-2, 48-1, 48-2), das zwischen dem Umfangskranz (31; 42, 47) und dem Ausgangsgetriebe (33; 45, 50) angeordnet ist, und
die Mittel zum Befestigen wenigstens eines Abschnitts des Untersetzungsgetriebes ferner Planetenradträger (34; 43, 49), welche an den Planetengetrieben befestigt sind, sowie Verriegelungsteile (36; 59i), welche an den Planetenradträgern befestigt sind, umfassen.

3. Vorrichtung (20; 60; 80; 90; 100) nach einem der Ansprüche 1 oder 2, ferner umfassend eine zweite Scheibe (22; 62), die geeignet ist, sich um eine Mittelachse (CC') zu drehen und mit der ersten Scheibe (21; 61; 81; 101; 118) gekoppelt ist, damit eine Rotation der ersten Scheibe (21; 61; 81; 101; 118) die zweite Scheibe (22; 62) drehend antreibt,
wobei die Mittel (34, 35i, 35i-1, 35i-2, 36i; 44, 49, 531, 532, 561, 562, 59i, 59i 1, 59i-2, 59i-3; 130, 131, 132) zum Festlegen des Abschnitts des Untersetzungsgetriebes mit der zweiten Scheibe (22; 62) gekoppelt sind.

4. Vorrichtung (20; 60; 80; 90; 100) nach Anspruch 3, bei der die Mittelachse (CC') der zweiten Scheibe (22; 62) gegenüber der Mittelachse (AA') der ersten Scheibe (21; 61; 81; 101; 118) außermittig angeordnet ist.

5. Vorrichtung (20; 60; 80; 90; 100) nach einem der Ansprüche 1 bis 4, umfassend:
- wenigstens zwei Umfangsrotationswellen (26i; 65i; 85i), wobei eine jede in einem im Wesentlichen gleichen Abstand (d1) von der Mittelachse (AA') der ersten Scheibe angeordnet ist und eine Umfangsrotationsachse (BiBi', B1B1') parallel zur Mittelachse (AA') umfasst, die mit der ersten Scheibe (21; 61; 81; 101) gekoppelt und in Bezug auf die Mitte (O1) der ersten Scheibe (21; 61; 81; 101) winkelmäßig (a1) gleich beabstandet ist, und
- wenigstens zwei Masseträger (27i; 66i; 86i; 91i; 102i; 110i), die jeweils auf einer Umfangsrotationswelle (26i; 65i; 85i) angebracht sind und eine Masse (Mi) aufweisen, die geeignet ist, von der Umfangsrotationswelle entfernt zu werden, um ein Drehmoment zu erzeugen, das die Umfangsrotationswelle und folglich die erste Scheibe (21; 61; 81; 101) drehen lässt.

6. Vorrichtung (20; 60; 80; 90; 100) nach einem der Ansprüche 3 bis 5, bei der:
- die erste Scheibe (21; 61; 81; 101; 118) eine mittlere Rotationswelle (23) umfasst, und
- die zweite Scheibe (22; 62) eine mittlere Rotationswelle (24) umfasst,
wobei die mittleren Rotationswellen (23; 24) durch ein Verbindungsstück (39) verbunden sind.

7. Vorrichtung (20; 60; 80; 90; 100) nach Anspruch 6, ferner umfassend ein Tragelement (25; 64), das mit der mittleren Rotationswelle (24) der zweiten Scheibe (22; 62) verbunden ist und gleichzeitig der ersten Scheibe (21; 61; 81; 101) und der zweiten Scheibe (22; 62) ermöglicht, sich zu drehen.

8. Vorrichtung (60; 80; 90; 100) nach einem der Ansprüche 1 bis 7, ferner umfassend eine dritte Scheibe (63), die gegenüber der ersten Scheibe (61; 81; 101) angeordnet ist, geeignet ist, sich um die Mittelachse (AA') der ersten Scheibe (61; 81; 101) zu drehen und ein Ende der Umfangsrotationswelle oder -wellen (65i; 85i) trägt.

9. Vorrichtung (90) nach Anspruch 1, bei der die Mittel zum Ändern des Winkels umfassen:
- wenigstens einen äußeren Nocken (92, 93), der gegenüber dem äußeren Ende eines Masseträgers (91i) angeordnet ist und eine Führungsfläche aufweist, und
- eine Laufrolle (97), die an einer Außenfläche eines Masseträgers (91i) angeordnet und geeignet ist, während der Drehung der ersten Scheibe (61) mit der Führungsfläche des Nockens (92, 93) in Kontakt zu kommen, um die Drehung des Masseträgers in entgegengesetzter Richtung der Drehung der ersten Scheibe (61) mittels des Freilaufs (67i) zu führen und den Neigungswinkel des Masseträgers zu verändern.

10. Vorrichtung (90) nach Anspruch 9, ferner umfassend einen Motor (95), der mit dem äußeren Nocken (92, 93) verbunden und geeignet ist, den Nocken um eine Rotationsachse (EE') des Nockens in der gleichen Drehrichtung wie die erste Scheibe (61) drehend anzutreiben (94).

11. Vorrichtung (20; 60; 80; 90; 100) nach einem der Ansprüche 1 bis 10,
bei der der Masseträger (66i; 86i; 91i; 102i; 110i) zwei dreieckförmige Platten (69A, 69B) umfasst, die in einem Abstand voneinander und in parallelen Ebenen angeordnet sind und durch längsverlaufende Tragelemente (69C, 69D) miteinander verbunden sind, wobei die Oberseiten der Platten Schienen (71, 72, 111, 112) aufweisen; und
bei der eine Massentragstange (73; 114) an ihren beiden Enden durch die Schienen getragen und geeignet ist, sich in einer Richtung (d2) entlang der Oberseiten der Platten zu bewegen.

12. Vorrichtung (20; 60; 80; 90; 100) nach Anspruch 11, bei der die Schienen (111, 112) des Masseträgers (110i) jeweils eine Vielzahl von elektromagnetischen Keilen (113) aufweisen, die geeignet sind, sich zu heben, um die Bewegung der Massentragstange (114) zu blockieren, und sich zu senken, um die Bewegung der Massentragstange (114) entlang der Oberseiten der Platten zu ermöglichen.

13. Verfahren zum Drehen einer Schwerkraftrotationsvorrichtung nach Anspruch 1, umfassend die Schritte des:
- Entfernens der Masse (Mi) eines Masseträgers (27i; 66i; 86i; 91i; 102i; 110i) von der Umfangsrotationswelle (26i; 65i; 85i), um ein Drehmoment zu erzeugen, das die Umfangsrotationswelle (26i; 65i; 85i) und folglich die erste Scheibe (21; 61; 81; 101) drehen lässt; und
- Veränderns (82, 84, 87, 88; 92, 93, 94, 95, 96, 97; 103i, 104i; 111, 112, 113, 114, 115) des Neigungswinkels (a11, a12, a13, a14) eines Masseträgers (86i; 91i; 102i; 110i) auf der Umfangsrotationswelle (26i; 65i; 85i) in Bezug auf die durch die Umfangsrotationsachse (BiBi') der Welle verlaufende Horizontale.

14. Verfahren zur Montage einer Schwerkraftrotationsvorrichtung (20; 60; 80; 90; 100) nach Anspruch 1, umfassend die Schritte des:
- Anbringens (S1) einer ersten Scheibe (21; 61; 81; 101), umfassend:
- eine Mittelachse (AA'), um die herum sich die Scheibe drehen kann, und
- wenigstens eine Umfangsrotationsachse (BiBi'), die in einem Abstand von und parallel zu der Mittelachse (AA') angeordnet ist,
- Anbringens (S2) wenigstens einer Umfangsrotationswelle (26i; 65i; 85i) der ersten Scheibe an dem Masseträger, die im Abstand von der Mittelachse (AA') der ersten Scheibe (21; 61; 81; 101) angeordnet ist, geeignet ist, sich um die Umfangsrotationsachse (BiBi') zu drehen, zu der Mittelachse (AA') parallel verläuft und mit der ersten Scheibe (21; 61; 81; 101; 118) gekoppelt ist,
- Anbringens (S3) eines Untersetzungsgetriebes (30i, 301, 302, 303, 304; 40i; 120i) zwischen der Umfangsrotationswelle (26i; 65i; 85i) und der ersten Scheibe (21; 61; 81; 101; 118), wobei das Untersetzungsgetriebe ein mit der Umfangsrotationswelle verbundenes Rotationseingangsteil (37; 41; 121) und ein mit der ersten Scheibe verbundenes Rotationsausgangsteil (33; 51; 127), welche koaxial zueinander sind, umfasst, wobei das Untersetzungsgetriebe die Übertragung der Drehung der Umfangsrotationswelle auf die erste Scheibe ermöglicht,
- Anbringens (S4) von Mitteln (34, 35i, 35i-1, 35i-2, 36i; 44, 49, 531, 532, 561, 562, 59i, 59i-1, 59i-2, 59i-3; 130, 131, 132), um wenigstens einen Abschnitt des Untersetzungsgetriebes in einer festen Position festzulegen, um zu verhindern, dass er sich um die Umfangsrotationsachse dreht,
- Anbringens (S5) eines Freilaufs (28i; 67i) an der Umfangsrotationswelle (26i; 65i; 85i),
- Anbringens (S6) wenigstens eines Masseträgers (27i; 66i; 86i; 91i; 102i; 110i) an der Umfangsrotationswelle (26i; 65i; 85i), wobei der Masseträger eine Masse (Mi) aufweist, die geeignet ist, von der Rotationswelle entfernt zu werden, um ein Drehmoment zu erzeugen, das die Rotationswelle drehen lässt, und
- Anbringens (S7) von Mitteln (82, 84, 87, 88; 92, 93, 94, 95, 96, 97; 103i, 104i; 111, 112, 113, 114, 115) zum Verändern des Neigungswinkels (a11, a12, a13, a14) des Masseträgers (86i; 91i; 102i; 110i) auf der Umfangsrotationswelle (26i; 65i; 85i) in Bezug auf die durch die Umfangsrotationsachse (BiBi') der Welle verlaufende Horizontale.

## Claims

1. A gravity rotary device (20; 60; 80; 90; 100) comprising:
- a first disk (21; 61; 81; 101; 118) comprising:
- a central axis (AA') about which the disk is capable of turning; and
- at least one peripheral axis of rotation (BiBi') arranged at a distance from and parallel to the central axis (AA');
- at least one peripheral rotary shaft (26i; 65i; 85i) arranged at a distance from the central axis (AA') of the first disk (21; 61; 81; 101), and suitable for turning about the peripheral axis of rotation (BiBi'), parallel to the central axis (AA'), and coupled to the first disk (21; 61; 81; 101; 118); and
- at least one mass support (27i; 66i; 86i; 91i; 102i; 110i) mounted on the peripheral rotary shaft (26i; 65i; 85i);
**characterized in that** the mass support comprises a mass (Mi) suitable for being moved away from the rotary shaft in order to produce torque causing the rotary shaft and consequently the first disk to pivot and **in that** the device further comprises:
- reduction gearing (30i, 301, 302, 303, 304; 40i; 120i) for reduction from the first disk to the mass support, the gearing being arranged between the peripheral rotary shaft (26i; 65i; 85i) and the first disk (21; 61; 81; 101; 118), the gearing comprising a rotary inlet part (37; 41; 121) connected to the peripheral rotary shaft and a rotary outlet part (33; 51; 127) connected to the first disk, the rotary inlet and outlet parts being on the same axis, the reduction gearing enabling the rotation of the peripheral rotary shaft to be transmitted to the first disk;
- means (34, 35i, 35i-1, 35i-2, 36i; 44, 49, 531, 532, 561, 562, 59i, 59i-1, 59i-2, 59i-3; 130, 131, 132) for fastening at least a portion of the reduction gearing in a stationary position in order to prevent it from turning about the peripheral axis of rotation;
- a freewheel (28i; 67i) arranged on the peripheral rotary shaft (26i; 65i, 85i); and
- means (82, 84, 87, 88; 92, 93, 94, 95, 96, 97; 103i, 104i; 111, 112, 113, 114, 115) for modifying the angle of inclination (a11, a12, a13, a14) of a mass support (86i; 91i; 102i; 110i) on the peripheral rotary shaft (26i; 65i; 85i) relative to the horizontal passing through the peripheral axis of rotation (BiBi') of the shaft.

2. A device (20; 60; 80; 90, 100) according to claim 1, wherein:
the reduction gearing further comprises:
- a peripheral ring (31; 42, 47) connected to the rotary inlet part (41);
- an outlet gear (33; 45, 50) connected to the rotary outlet part; and
- at least one planet gear (32-j, 32-1, 32-2, 32-3, 32-4; 43-1, 43-2, 48-1, 48-2) arranged between the peripheral ring (31; 42, 47) and the outlet gear (33; 45, 50); and
the means for fastening at least a portion of the reduction gearing further comprise planet carriers (34; 43, 49) fastened to the planet gears and locking parts (36; 59i) fastened to the planet carriers.

3. A device (20; 60; 80; 90, 100) according to claim 1 or 2, further comprising a second disk (22; 62) suitable for turning about a central axis (CC') and coupled to the first disk (21; 61; 81; 101; 118) so that rotation of the first disk (21; 61; 81; 101; 118) entrains rotation of the second disk (22; 62),
the means (34, 35i, 35i-1, 35i-2, 36i; 44, 49, 531, 532, 561, 562, 59i, 59i-1, 59i-2, 59i-3; 130, 131, 132) for fastening the portion of the reduction gearing being coupled to the second disk (22; 62).

4. A device (20; 60; 80; 90, 100) according to claim 3, wherein the central axis (CC') of the second disk (22; 62) is off-center relative to the central axis (AA') of the first disk (21; 61; 81; 101; 118).

5. A device (20; 60; 80; 90, 100) according to any one of claims 1 to 4, comprising:
- at least two peripheral rotary shafts (26i; 65i; 85i), each being arranged at substantially the same distance (d1) from the central axis (AA') of the first disk and having a peripheral axis of rotation (BiBi', B1B1') parallel to the central axis (AA'), coupled to the first disk (21; 61; 81; 101), and angularly equidistant (a1) relative to the center (O1) of the first disk (21; 61; 81; 101); and
- at least two mass supports (27i; 66i; 86i; 91i; 102i; 110i), each mounted on a peripheral rotary shaft (26i; 65i, 85i) and having a mass (Mi) suitable for being moved away from the peripheral rotary shaft in order to produce torque causing the peripheral rotary shaft, and consequently the first disk (21; 61; 81; 101), to rotate.

6. A device (20; 60; 80; 90, 100) according to any one of claims 3 to 5, wherein:
- the first disk (21; 61; 81; 101; 118) includes a central rotary shaft (23); and
- the second disk (22; 62) includes a central rotary shaft (24);
the central rotary shafts (23; 24) being connected together by a connection part (39).

7. A device (20; 60; 80; 90, 100) according to claim 6, further comprising a support element (25; 64) connected to the central rotary shaft (24) of the second disk (22; 62) while enabling the first disk (21; 61; 81; 101) and the second disk (22; 62) to turn.

8. A device (60; 80; 90, 100) according to any one of claims 1 to 7, further comprising a third disk (63) arranged facing the first disk (61; 81; 101), suitable for turning about the central axis (AA') of the first disk (61; 81; 101), and supporting one end of the peripheral rotary shaft(s) (65i; 85i).

9. A device (90) according to claim 1, wherein the means for modifying the angle comprise:
- at least one external cam (92, 93) arranged facing the outer end of a mass support (91i) and including a guide surface; and
- a follower wheel (97) arranged on an outer surface of a mass support (91i) and suitable for coming into contact with the guide surface of the cam (92, 93) during rotation of the first disk (61) in order to guide the rotation of the mass support in the direction opposite to the direction of rotation of the first disk (61), by virtue of the freewheel (67i) and in order to change the angle of inclination of the mass support.

10. A device (90) according to claim 9, further comprising a motor (95) connected to the external cam (92, 93) and suitable for driving the cam in rotation (94) about an axis of rotation (EE') of the cam in the same direction as the direction of rotation of the first disk (61).

11. A device (20; 60; 80; 90, 100) according to any one of claims 1 to 10, wherein the mass support (66i; 86i; 91i; 102i; 110i) comprises two plates (69A, 69B) of triangular shape that are arranged at a distance apart from each other and in parallel planes, the plates being connected to each other by longitudinal support elements (69C, 69D), with the top sides of the plates having rails (71, 72; 111, 112); and
wherein a mass-carrier bar (73; 114) is supported at its two ends by the rails and is suitable for moving along a direction (d2) along the top sides of the plates.

12. A device (20; 60; 80; 90, 100) according to claim 11, wherein each of the rails (111, 112) of the mass support (110i) includes a plurality of electromagnetic chocks (113) suitable for rising in order to block movement of the mass-carrier bar (114) and for lowering in order to allow the mass-carrier bar (114) to move along the top sides of the plates.

13. A method of rotating a gravity rotation device according to claim 1, the method comprising the steps of:
- moving the mass (Mi) of a mass support (27i; 66i; 86i; 91i; 102i; 110i) away from the peripheral rotary shaft (26i; 65i; 85i) in order to produce torque causing the peripheral rotary shaft (26i; 65i; 85i) to pivot and consequently causing the first disk (21; 61; 81; 101) to pivot; and
- modifying (82, 84, 87, 88; 92, 93, 94, 95, 96, 97; 103i, 104i; 111, 112, 113, 114, 115) the angle of inclination (a11, a12, a13, a14) of a mass support (86i; 91i; 102i; 110i) on the peripheral rotary shaft (26i; 65i; 85i) relative to the horizontal passing through the peripheral axis of rotation (BiBi') of the shaft.

14. A method of assembling a gravity rotation device (20; 60; 80; 90; 100) according to claim 1, the method comprising the steps of:
- mounting (S1) a first disk (21; 61; 81; 101) comprising:
- a central axis (AA') about which the disk is capable of turning; and
- at least one peripheral axis of rotation (BiBi') arranged at a distance from and parallel to the central axis (AA');
- mounting (S2) at least one peripheral rotary shaft (26i; 65i; 85i) from the first disk to the mass support, arranged at a distance from the central axis (AA') of the first disk (21; 61; 81; 101), suitable for turning about the peripheral axis of rotation (BiBi'), parallel to the central axis (AA'), and coupled to the first disk (21; 61; 81; 101);
- mounting (S3) reduction gearing (30i, 301, 302, 303, 304; 40i; 120i) between the peripheral rotary shaft (26i; 65i; 85i) and the first disk (21; 61; 81; 101; 118), the reduction gearing comprising a rotary inlet part (37; 41; 121) connected to the peripheral rotary shaft and a rotary outlet part (33; 51; 127) connected to the first disk, the rotary inlet and outlet parts being on the same axis, the reduction gearing enabling the rotation of the peripheral rotary shaft to be transmitted to the first disk;
- mounting (S4) means (34, 35i, 35i-1, 35i-2, 36i; 44, 49, 531, 532, 561, 562, 59i, 59i-1, 59i-2, 59i-3; 130, 131, 132) for fastening at least a portion of the reduction gearing in a stationary position in order to prevent it from turning about the peripheral axis of rotation;
- mounting (S5) a freewheel (28i; 67i) on the peripheral rotary shaft (26i; 65i, 85i);
- mounting (S6) at least one mass support (27i; 66i; 86i; 91i; 102i; 110i) on the peripheral rotary shaft (26i; 65i; 85i), the mass support having a mass (Mi) suitable for being moved away from the rotary shaft in order to produce torque causing the rotary shaft to pivot; and
- mounting (S7) means (82, 84, 87, 88; 92, 93, 94, 95, 96, 97; 103i, 104i; 111, 112, 113, 114, 115) for modifying the angle of inclination (a11, a12, a13, a14) of the mass support (86i; 91i; 102i; 110i) on the peripheral rotary shaft (26i; 65i; 85i) relative to the horizontal passing through the peripheral axis of rotation (BiBi') of the shaft.
